# EUROPÄISCHE PATENTSCHRIFT

(11) **EP 4 175 889 B1**
(45) Veröffentlichungstag und Bekanntmachung des Hinweises auf die Patenterteilung: **12.06.2024**
(21) Anmeldenummer: 21737584.9
(22) Anmeldetag: 23.06.2021
(51) Int. Cl.: B65D 5/74

(54) **EINSATZTEIL FÜR EINE VERPACKUNGSÖFFNUNG UND VERFAHREN ZUM EINSETZEN EINES EINSATZTEILS IN EINE VERPACKUNGSÖFFNUNG**
INSERT PART FOR A PACKAGING OPENING, AND METHOD FOR INSTERTING AN INSERT PART INTO A PACKAGING OPENING
PIÈCE D'INSERTION CONÇUE POUR UNE OUVERTURE D'EMBALLAGE ET PROCÉDÉ POUR INSÉRER UNE PIÈCE D'INSERTION DANS UNE OUVERTURE D'EMBALLAGE

(30) Priorität: 02.07.2020 DE 102020117516
(43) Veröffentlichungstag der Anmeldung: 10.05.2023
(73) Patentinhaber: Induflex Robert Morgan e.K., 27337 Blender (DE)
(72) Erfinder: MORGAN, Robert, 27337 Blender (DE)
(74) Vertreter: Eisenführ Speiser
(86) Internationale Anmeldenummer: PCT/EP2021/067154
(87) Internationale Veröffentlichungsnummer: WO 2022/002718

(56) Entgegenhaltungen:
- WO-A1-91/08957
- WO-A1-94/08858
- DE-A1-102010 014 480
- DE-U1- 20 012 192
- US-A- 4 227 629

## Beschreibung

Die Erfindung betrifft ein Einsatzteil für eine Verpackungsöffnung, die an einer Verpackung, insbesondere einer Lebensmittelverpackung, ausgebildet ist. Ein derartiges Einsatzteil weist einen im Wesentlichen zylindrischen Hohlkörper zum Durchleiten von Verpackungsinhalt auf und ist durch eine Verschlusskappe verschließbar. Das Einsatzteil wird beispielsweise in die Verpackungsöffnung einer Getränkeverpackung eingesetzt, um die Getränkeverpackung mit einem wiederverschließbaren Ausgießstutzen zu versehen.

Bei Einsatzteilen für Verpackungsöffnungen besteht eine Herausforderung darin, die Verpackungsöffnung derart abzudichten, dass der Verpackungsinhalt nicht unerwünscht aus der Verpackung entweicht. Insbesondere soll verhindert werden, dass Verpackungsinhalt zwischen der Verpackungsöffnung und einer Außenseite des Einsatzteils austritt. Mit anderen Worten soll sichergestellt werden, dass der Verpackungsinhalt lediglich durch den Hohlkörper aus der Verpackung austreten kann, wenn die Verschlusskappe entfernt ist. Darüber hinaus sollen möglichst keine Keime oder andere Fremdstoffe von außen durch die Verpackungsöffnung in das Innere der Verpackung gelangen. Dies ist insbesondere bei Lebensmittelverpackungen erforderlich, um die Haltbarkeit des Verpackungsinhalts zu gewährleisten.

Eine weitere Herausforderung besteht darin, das Einsatzteil fest mit der Verpackung zu verbinden, sodass sich das Einsatzteil nicht durch auf die Verpackung und/oder das Einsatzteil einwirkende Kräfte aus der Verpackungsöffnung löst. Eine feste und zuverlässige Verbindung ist jedoch insbesondere dann nicht leicht zu realisieren, wenn die Verpackung aus einem flexiblen Material, wie einem für Getränkeverpackungen verwendeten Kartonmaterial gefertigt ist. Die Verbindung zwischen dem Einsatzteil und der Verpackung sollte allerdings gewissen Verformungen standhalten können, sodass sich das Einsatzteil nicht von der Verpackung löst.

Es ist bekannt, das Einsatzteil mit der Verpackung zu verkleben, um die Verpackungsöffnung abzudichten. Ein Verkleben des Einsatzteils ist jedoch mit Nachteilen verbunden. Einerseits müssen die Einsatzteile vor dem Einsetzen in eine Verpackungsöffnung mit einem Klebstoff beschichtet werden, der eine zuverlässige Kleb- und Abdichtwirkung gewährleistet und zudem auch eine gewisse Haltbarkeit bietet. Bei Lebensmittelverpackungen muss der Klebstoff zusätzlich lebensmittelecht ausgebildet sein. Diese Anforderungen sorgen für einen hohen Kostenanteil bei der Herstellung von Verpackungen, die mit Einsätzen für Verpackungsöffnungen versehen werden sollen. Darüber hinaus hat sich gezeigt, dass die verwendeten Klebstoffe bei unterschiedlichen Verpackungsoberflächen unterschiedliche Kleb- und Dichtungseigenschaften entfalten. Diese Eigenschaften sind auch von der Menge des pro Flächeneinheit verwendeten Klebstoffs abhängig. Somit besteht insgesamt eine hohe Komplexität, die die Herstellung von Verpackungen mit verklebten Einsätzen erschwert und verteuert.

Es ist auch bekannt, das Einsatzteil mit der Verpackung zu verschweißen. Hierfür werden insbesondere Ultraschallschweißverfahren eingesetzt. Beispielsweise kann ein Einsatzteil, welches aus Polyethylen besteht, mit einer Verpackung verschweißt werden, die eine Beschichtung aus Polyethylen aufweist. Wenngleich bei dieser Art der Verbindung auf den Einsatz von Klebstoffen verzichtet werden kann, so bestehen dennoch erhebliche Nachteile. Einerseits ist Ultraschallschweißen ein vergleichsweise aufwändiges Verfahren, weil entsprechende Schweißanlagen mit hohen Anschaffungs- und Wartungskosten verbunden sind und auch speziell geschultes Personal erforderlich macht. Darüber hinaus setzt die Anwendung des Verfahrens die Verwendung von schweißbaren Materialien voraus, wie etwa Polyethylen. Die Materialauswahl ist daher bei Anwendung von Ultraschallschweißen sowohl für die Verpackung, als auch für das Einsatzteil auf entsprechend geeignete Materialien eingeschränkt. Beispielsweise können keine natürlichen bzw. nachhaltigen Materialien, wie etwa Holz oder Bambus eingesetzt werden, weil diese also solche nicht geschweißt werden können. Stattdessen wird bei Einsatz von Ultraschallschweißen auf Materialien wie Polyethylen zurückgegriffen, die allerdings oftmals als wenig ökologisch nachhaltig angesehen werden. Als weiterer Nachteil hat sich gezeigt, dass während des Schweißvorgangs Mikropartikel entstehen, die die Verpackung und dementsprechend auch den Verpackungsinhalt verunreinigen können. Derartige Verunreinigungen sind jedoch hochgradig unerwünscht. Dies ist wegen der allgemein zunehmenden Aversion gegen Fremdstoffe in Lebensmitteln auch unabhängig davon der Fall, ob für die Aufnahme von etwaigen Fremdstoffen ein gesundheitliches Risiko nachweisbar ist, oder nicht.

Die Dokumente DE 200 12 192 U1 und DE 10 2010 014 480 A1 offenbaren Einsatzteile für Verpackungsöffnungen.

Es ist eine Aufgabe der Erfindung, einen Einsatz für eine Verpackungsöffnung anzugeben, der ein einfaches Einsetzen in die Verpackungsöffnung und eine zuverlässige Abdichtwirkung gewährleistet.

Die Aufgabe wird gelöst durch einen Einsatz gemäß Anspruch 1.

Eine weitere Aufgabe der Erfindung besteht darin, ein einfaches Verfahren zum Einsetzen von Einsatzteilen in Verpackungsöffnungen anzugeben, wobei eine zuverlässige Dichtwirkung gewährleistet wird.

Die weitere Aufgabe wird gelöst durch ein Verfahren gemäß dem unabhängigen Verfahrensanspruch.

Ein Einsatzteil gemäß Anspruch 1 ist für eine Verpackungsöffnung vorgesehen, die an einer Verpackung, insbesondere einer Lebensmittelverpackung, ausgebildet ist. Das Einsatzteil weist einen im Wesentlichen zylindrischen Hohlkörper zum Durchleiten von Verpackungsinhalt durch die Verpackungsöffnung auf. Das Einsatzteil weist einen ersten Dichtabschnitt auf, um die Verpackungsöffnung im Bereich einer Innenseite der Verpackung abzudichten. Das Einsatzteil weist ferner einen zweiten Dichtabschnitt auf, um die Verpackungsöffnung im Bereich einer Außenseite der Verpackung abzudichten. Zwischen dem ersten Dichtabschnitt und dem zweiten Dichtabschnitt ist ein Spalt zur Aufnahme eines die Verpackungsöffnung begrenzenden Randabschnitts der Verpackung gebildet, wobei das Einsatzteil wenigstens eine Einführhilfe zum Einführen des Randabschnitts in den Spalt aufweist.

Das Einsatzteil erlaubt einerseits ein einfaches Einsetzen in die Verpackungsöffnung. Das Einsetzen kann hierzu mechanisch erfolgen, insbesondere durch Drehen des Einsatzteils in der Verpackungsöffnung. Beispielsweise kann das Einsatzteil in die Verpackungsöffnung eingeführt und durch die Öffnung bewegt werden bis der Randabschnitt der Verpackungsöffnung an der Einführhilfe anliegt. Sodann kann der Randabschnitt durch Drehen des Einsatzteils in den Spalt eingeführt werden, wobei der Randabschnitt abschnittsweise mit der Einführhilfe zusammenwirkt und auf diese Weise in Richtung hin zu dem Spalt gedrängt wird. Vorzugsweise wird das Einsatzteil solange gedreht bis der Randabschnitt entlang des Außenumfangs des Einsatzteils vollständig in den Spalt aufgenommen ist. Der erste und zweite Dichtabschnitt gewährleisten eine besonders zuverlässige Dichtwirkung gegenüber der Innenseite und der Außenseite der Verpackung, sodass sowohl ein unerwünschtes Entweichen von Verpackungsinhalt, als auch ein unerwünschtes Eindringen von Fremdstoffen in die Verpackung unterbunden wird. Die zweifache Dichtung bietet auch eine redundante Dichtwirkung. Wenn eine der beiden Dichtabschnitte versagt oder zumindest keine optimale Dichtwirkung bietet, so kann der andere der beiden Dichtabschnitte die fehlende Dichtwirkung kompensieren.

Ein besonderer Vorteil des Einsatzteils besteht darin, dass es auf rein mechanischem Wege in die Verpackungsöffnung eingesetzt und fest mit der Verpackung verbunden werden kann. Auf die Verwendung von Klebstoff kann daher vollständig verzichtet werden. Ebenso kann auf die Anwendung von Ultraschallschweißen verzichtet werden, sodass der Eintrag von unerwünschten und womöglich schädlichen Mikropartikeln in das Einsatzteil oder die Verpackung vollständig vermieden wird. Darüber hinaus wird ökologischen Aspekten auf besondere Weise Rechnung getragen. So können insbesondere Materialien verwendet werden, die bislang aufgrund der verwendeten Verbindungstechniken nicht in Betracht kommen konnten, wie etwa Holz oder Bambus. Darüber hinaus können durch die einfache und mechanische Befestigung des Einsatzteils Kosteneinsparungen in beträchtlichem Umfang realisiert werden, insbesondere durch Verzicht auf aufwändige Ultraschallschweißverfahren. Bisherige Produktionsanlagen zur Herstellung von Verpackungen mit Einsätzen können somit auch leicht umgerüstet werden.

Vorzugsweise sind der erste und der zweite Dichtabschnitt an einer Außenseite des Einsatzteils vorgesehen, insbesondere an einer Außenseite des Hohlkörpers. Die Dichtungen können somit kompakt ausgebildet werden und die Verpackungsöffnung dennoch optimal abdichten.

Es versteht sich, dass die durch die Dichtabschnitte beabsichtigte Dichtwirkung in optimalem Umfang erst dann eintritt, wenn das Einsatzteil in die Verpackungsöffnung eingesetzt und der Randabschnitt in den Spalt aufgenommen ist. Es ist jedoch auch denkbar, dass die Dichtabschnitte in abweichenden oder ähnlichen mechanischen Befestigungskonstellationen eine Dichtwirkung entfalten. Beispielsweise können der erste und/oder zweite Dichtabschnitt einen Innenraum der Verpackung in gewissem Umfang bereits abdichten, wenn das Einsatzteil in die Verpackungsöffnung eingeführt ist, der Randabschnitt aber noch nicht in den Spalt eingreift. Dies ist vorteilhaft, um eine etwaige Verunreinigung der Verpackung bereits während der Befestigung des Einsatzteils zu vermeiden.

Ausführungsformen des Einsatzteils sind in der Beschreibung, den Figuren und den Ansprüchen angegeben.

Gemäß einer Ausführungsform besitzt der erste Dichtabschnitt eine erste vordefinierte Dichtungsfunktion, um ein Austreten des Verpackungsinhalts aus der Verpackung zu unterbinden, wenn das Einsatzteil in die Verpackungsöffnung eingesetzt und der Randabschnitt in den Spalt aufgenommen ist. Die erste Dichtungsfunktion kann z.B. an vordefinierte Oberflächeneigenschaften der Verpackung, insbesondere der Innenseite der Verpackung, angepasst sein. Beispielsweise kann gemäß der ersten Dichtungsfunktion ein Austreten von flüssigem Verpackungsinhalt bis zu einem vordefinierten Druck verhindert werden, wenn das Einsatzteil in die Verpackungsöffnung eingesetzt und der Randabschnitt in den Spalt aufgenommen ist. Hierbei kann der erste Dichtabschnitt mit einer vordefinierten Kraft mit der Verpackung zusammenwirken.

Gemäß einer Ausführungsform besitzt der zweite Dichtabschnitt eine zweite vordefinierte Dichtungsfunktion, um ein Eindringen von Fremdstoffen in die Verpackung zu unterbinden, wenn das Einsatzteil in die Verpackungsöffnung eingesetzt und der Randabschnitt in den Spalt aufgenommen ist. Die zweite Dichtungsfunktion kann an vordefinierte Oberflächeneigenschaften der Verpackung, insbesondere der Außenseite der Verpackung, angepasst sein. Beispielsweise kann gemäß der zweiten Dichtungsfunktion ein Eindringen von Fremdstoffen, wie etwa Keimen, bis zu einer vordefinierten Maximalrate verhindert werden. Hierbei können, ebenso wie bei der ersten Dichtungsfunktion, gewöhnliche Umgebungsbedingungen (z.B. bei der Lagerung und des Transports) unterstellt werden. Ferner kann bei der zweiten Dichtungsfunktion unterstellt werden, dass der zweite Dichtabschnitt mit einer vordefinierten Kraft mit der Verpackung zusammenwirkt, wenn das Einsatzteil in die Verpackungsöffnung eingesetzt und der Randabschnitt in den Spalt aufgenommen ist.

Gemäß einer Ausführungsform erstrecken sich der erste und/oder zweite Dichtabschnitt im Wesentlichen ringförmig um den Hohlkörper herum. Der erste und/oder zweite Dichtabschnitt kann abschnittsweise unterbrochen sein, um ein Einführen des Randabschnitts zu vereinfachen. Vorzugsweise weist der zweite Dichtabschnitt zumindest eine Unterbrechung auf, wobei der erste Dichtabschnitt vorzugsweise keine Unterbrechung aufweist.

Gemäß einer Ausführungsform weist der erste Dichtabschnitt einen ersten Dichtring auf, der an einem Flanschabschnitt des Hohlkörpers ausgebildet ist. Der Flanschabschnitt kann Bestandteil des ersten Dichtabschnitts sein. Vorzugsweise ist der erste Dichtring flexibel ausgebildet und erstreckt sich schräg von dem Flanschabschnitt weg. Somit kann eine optimale Dichtwirkung für unterschiedliche Lagen der Verpackung relativ zu dem Flanschabschnitt gewährleistet werden. Der Flanschabschnitt kann zudem vorteilhaft einen Anschlagabschnitt bilden, um ein Durchrutschen des Einsatzteils durch die Verpackungsöffnung zu unterbinden. Der Flanschabschnitt kann auch den ersten Dichtabschnitt bilden und beispielsweise als Dichtring ausgebildet sein.

Gemäß einer Ausführungsform weist der zweite Dichtabschnitt wenigstens einen zweiten Dichtring auf, der im Bereich der wenigstens einen Einführhilfe unterbrochen ist. Vorzugsweise ist ein zweiter Dichtring vorgesehen, der nicht flexibel ausgebildet ist und dementsprechend eine hohe mechanische Stabilität aufweist. Die sichere Befestigung des Einsatzteils an der Verpackung wird hierdurch begünstigt. Es ist jedoch auch denkbar, zwei Dichtringe vorzusehen, die in axialer Richtung des Hohlkörpers benachbart zueinander angeordnet sind, um miteinander zusammenzuwirken. Einer der beiden Dichtringe kann hierbei flexibler ausgebildet sein als der andere. Auf diese Weise kann einer der beiden Dichtringe einen stabilen Haltering bilden, der primär für eine mechanische Befestigung des Einsatzteils an dem Randabschnitt sorgt. Der andere Dichtring kann hingegen vorwiegend für eine zuverlässige Abdichtwirkung vorgesehen sein. Beide Dichtringe können im Bereich der Einführhilfe geöffnet sein, um das Einführen des Randabschnitts in den Spalt zu ermöglichen oder zu erleichtern.

Gemäß einer Ausführungsform weist der zweite Dichtabschnitt einen dritten Dichtring auf, insbesondere wobei der dritte Dichtring geschlossen ist. Bei dem dritten Dichtring kann es sich um einen flexiblen Dichtring handeln, der abschnittsweise ausgelenkt werden kann, um eine Einführen des Randabschnitts in den Spalt zu ermöglichen. Sodann kann sich der Dichtring wieder in seine Normalposition entfalten und eine Dichtwirkung entlang des vollständigen Umfangs des zweiten Dichtabschnitts gewährleisten.

Gemäß einer Ausführungsform ist der Spalt zumindest abschnittsweise durch eine Nut des Hohlkörpers gebildet. Beispielsweise kann sich die Nut an einer Außenseite des Hohlkörpers in einer Umfangsrichtung des Hohlkörpers erstrecken und nach außen geöffnet sein. Die Nut kann sich zwischen einem Flanschabschnitt des Hohlkörpers und dem zweiten Dichtabschnitt, insbesondere einem Dichtring des zweiten Dichtabschnitts erstrecken. Die Nut kann in Übereinstimmung mit einer jeweiligen Unterbrechung des zweiten Dichtabschnitts unterbrochen sein, um ein Einführen des Randabschnitts in den Spalt zu erleichtern.

Gemäß einer Ausführungsform weist der erste Dichtabschnitt ein Übermaß gegenüber dem zweiten Dichtabschnitt auf. Die Dichtwirkung kann hierdurch noch weiter verbessert werden, wobei auch eine sichere mechanische Befestigung des Einsatzteils an der Verpackung begünstigt wird.

Gemäß einer Ausführungsform ist das Einsatzteil so ausgestaltet, dass der erste Dichtabschnitt den zweiten Dichtabschnitt zumindest teilweise umgibt. Beispielsweise kann der erste Dichtabschnitt den zweiten Dichtabschnitt in einer radialen Richtung des Hohlkörpers zumindest teilweise umgeben oder umschließen. Der Randabschnitt kann somit zwischen dem ersten Dichtabschnitt und dem zweiten Dichtabschnitt vorteilhaft eingespannt werden, wenn das Einsatzteil in die Verpackungsöffnung eingesetzt und der Randabschnitt in den Spalt aufgenommen ist. Die Dichtwirkung kann auf diese Weise noch weiter erhöht werden. Ferner kann das Einsatzteil mit verschiedenen Verpackungsstärken und Materialien kompatibel sein.

Gemäß einer Ausführungsform weist das Einsatzteil einen ersten Bereich mit einem ersten Außenmaß auf. Ferner weist der zweite Dichtabschnitt einen zweiten Bereich mit einem zweiten Außenmaß auf, wobei das erste Außenmaß kleiner als das zweite Außenmaß ist. Die Einführhilfe weist einen sichelförmigen Abschnitt auf, der einen Übergang zwischen dem ersten Bereich und dem zweiten Bereich bildet. Beispielsweise kann die Einführhilfe und/oder der zweite Dichtabschnitt zumindest abschnittsweise gewindeartig ausgebildet sein. Der sichelförmige Bereich kann eine Gleitkante aufweisen, die im Wesentlichen glatt von dem ersten Bereich in den zweiten Bereich übergeht. Hierdurch kann der Randabschnitt mit sehr geringer Reibung an der Gleitkante entlanggleiten, um während einer Drehbewegung des Einsatzteils in den Spalt eingeführt zu werden. Das Verletzungsrisiko für den Randabschnitt ist hierbei sehr gering. Somit können auch vergleichsweise dünne oder empfindliche Verpackungsmaterialien verwendet werden. Die Herstellungskosten für entsprechende Verpackungen können dementsprechend noch weiter gesenkt werden.

Gemäß einer Ausführungsform verläuft die wenigstens eine Einführhilfe schräg zu einer Umfangsrichtung des zweiten Dichtabschnitts. Beispielsweise kann die Einführhilfe einen Winkel zu dem zweiten Dichtabschnitt einschließen, der einen Öffnungsbereich für eine Unterbrechung des zweiten Dichtabschnitts repräsentiert. Der Winkel kann in einem Bereich von 5 bis 45 Grad liegen, vorzugsweise 15 bis 35 Grad, besonders bevorzugt etwa 25 Grad. Der Randabschnitt der Verpackung kann dann mit geringem Kraftaufwand und einer relativ kleinen Drehbewegung sicher und materialschonend in den Spalt eingeführt werden.

Gemäß einer Ausführungsform ist die wenigstens eine Einführhilfe integral mit dem zweiten Dichtabschnitt oder einem Teil hiervon verbunden. Auf diese Weise kann ein besonders glatter und mechanisch stabiler Übergang zwischen dem zweiten Dichtabschnitt und der Einführhilfe geschaffen werden, sodass der Randabschnitt mit geringem Kraftaufwand in den Spalt eingeführt werden kann, insbesondere durch ein Entlanggleiten an einer Gleitkante der Einführhilfe. Vorzugsweise ist die Einführhilfe integral mit einem Dichtring des zweiten Dichtabschnitts verbunden.

Gemäß einer Ausführungsform umfasst die wenigstens eine Einführhilfe mehrere Einführhilfen. Eine Drehbewegung des Einsatzteils zum Einführen des Randabschnitts entlang des gesamten Umfangs kann somit reduziert werden. Dementsprechend kann auch die für ein Einsetzen des Einsatzteils in eine Verpackungsöffnung erforderliche Zeit verringert werden. Dies stellt besonders bei der Massenherstellung von Verpackungen einen besonderen Vorteil dar. Vorzugsweise sind die mehreren Einführhilfen in gleichmäßigen Abständen entlang eines Außenumfangs des Hohlkörpers angeordnet. Weiter bevorzugt sind zwei Einführhilfen vorgesehen, die an diametral gegenüberliegenden Seiten des Hohlkörpers ausgebildet sind. Der Randabschnitt kann somit gleichzeitig an zwei gegenüberliegenden Stellen in den Spalt eindringen und in diesen hineingeführt werden, wobei eine Drehung von etwa 180 Grad ausreichend ist, um den Randabschnitt entlang des gesamten Umfangs in den Spalt einzuführen. Es können auch mehr als zwei Einführhilfen vorgesehen sein. Vorzugsweise sind die mehreren Einführhilfen gleichartig ausgebildet. Es ist jedoch auch möglich, dass lediglich eine Einführhilfe vorgesehen ist. Die mechanische Stabilität sowie die Dichtungseigenschaften können dadurch maximiert werden.

Gemäß einer Ausführungsform ist der erste Dichtabschnitt zumindest teilweise flexibler als der zweite Dichtabschnitt ausgebildet, wobei der zweite Dichtabschnitt vorzugsweise zumindest im Wesentlichen nicht flexibel ist. Beispielsweise kann der erste Dichtabschnitt zumindest teilweise aus einem elastischen Material, wie etwa einem Elastomer gebildet sein. Eine zuverlässige Abdichtwirkung gegenüber dem Verpackungsinhalt kann auf diese Weise besonders gut gewährleistet werden. Der zweite Dichtabschnitt kann zumindest teilweise aus einem relativ unflexiblen Material, wie etwa Polyethylen oder Polypropylen gebildet sein. Auf diese Weise kann die sichere mechanische Befestigung gewährleistet werden, wobei auch eine ausreichende Abdichtwirkung gegenüber Fremdstoffen von außen erzielt werden kann. Der relativ unflexible zweite Dichtabschnitt kann auch ein zuverlässiges Einklemmen des Randabschnitts in dem Spalt sicherstellen, sodass die Dichtwirkung insgesamt weiter erhöht wird.

Gemäß einer Ausführungsform sind der erste und/oder zweite Dichtabschnitt zumindest teilweise flexibel ausgebildet. Beispielsweise können die Dichtabschnitte zumindest teilweise aus einem elastischen Material, wie etwa einem Elastomer gebildet sein. Ferner können verschiedene Teile der Dichtabschnitte unterschiedlich flexibel ausgebildet sein. Beispielsweise können der erste und zweite Dichtabschnitt jeweils einen Dichtring aus einem Elastomer aufweisen. Zusätzlich kann das Einsatzteil Strukturen, insbesondere Dichtringe aus Polyethylen oder dergleichen aufweisen, um die mechanische Befestigung des Einsatzteils an der Verpackung zu bewerkstelligen. Auf diese Weise können sowohl eine optimale Dichtwirkung, als auch eine zuverlässige mechanische Befestigung des Einsatzteils an dem Randabschnitt gewährleistet werden. Die Strukturen sind vorzugsweise integral mit dem Einsatzteil ausgebildet. Beispielsweise können Dichtringe integral, d.h. einstückig mit dem Hohlkörper ausgebildet sein, wobei der Hohlkörper und die Dichtringe aus einem gemeinsamen Material, vorzugsweise Polyethylen oder Polypropylen gebildet sein können. Je nach Dimensionierung des verwendeten Dichtungsmaterials und der Größe der Verpackungsöffnung sind allerdings auch andere Abdichtungslösungen denkbar. Beispielsweise können die Dichtabschnitte jeweils ausschließlich Dichtringe aus einem Elastomer aufweisen. Derartige Dichtungen können so dimensioniert sein, dass sie zuverlässig abdichten und über eine ausreichende mechanische Stabilität verfügen, um das Einsatzteil an dem Randabschnitt zu halten.

Gemäß einer Ausführungsform weist der Hohlkörper Mittel zum formschlüssigen Verbinden mit einer Verschlusskappe auf. Beispielsweise weist der Hohlkörper ein Außengewinde zum Aufschrauben einer Verschlusskappe auf. Somit kann ein System gebildet werden, welches ein Einsatzteil nach einem der beschriebenen Ausführungsformen sowie eine Verschlusskappe zum formschlüssigen Verbinden mit dem Hohlkörper, insbesondere zum Aufschrauben auf das Außengewinde umfasst. Ein solches System bietet einen komfortablen und sicheren Verschluss für eine Verpackung, insbesondere eine Getränkeverpackung. Es kommen jedoch auch andere Verbindungsformen als Schraubverschlüsse in Betracht, beispielsweise Rast- oder Klemmverbindungen, wobei sowohl Einwegverschlüsse als auch wiederverschließbare Verschlüsse (Mehrwegverschlüsse) möglich sind. Als ein Beispiel kann als Verschlusskappe ein sogenannter Ring-pull-Verschluss vorgesehen sein. Dieser Verschluss kann als Einwegverschluss ausgebildet sein, wobei z.B. durch manuelles Ziehen an einer Zugöse eine den Hohlkörper verschließende Materiallage entfernt wird. Als Verschlusskappe kann somit auch eine Materiallage des Einsatzteils vorgesehen sein, die durch eine Person irreversibel entfernt wird, um einen Durchlass für den Verpackungsinhalt zu schaffen. Es ist zu verstehen, dass eine Verschlusskappe nicht zwingend Bestandteil des Einsatzteils sein muss und andere Wege des Verschließens denkbar sind, wenn der Hohlkörper einmalig geöffnet (Einwegverschluss) oder wiederholt geöffnet und verschlossen werden soll (Mehrwegverschluss).

Gemäß einem weiteren Aspekt wird eine Verpackung offenbart, insbesondere eine Lebensmittelverpackung, wobei die Verpackung eine Verpackungsöffnung mit einem in die Verpackungsöffnung eingesetzten Einsatzteil nach einem der beschriebenen Ausführungsformen aufweist.

Gemäß einer Ausführungsform sind das Einsatzteil und die Verpackung nicht miteinander verklebt, verschweißt, oder anderweitig stoffschlüssig verbunden. Schwierigkeiten und Nachteile bei der Verwendung von Klebstoffen und anderen stoffschlüssigen Verbundtechniken, die mit dem Risiko einer Freisetzung von Stoffen wie etwa Mikropartikel einhergehen, können daher vollständig vermieden werden. Dies stellt insbesondere bei Lebensmittelverpackungen einen signifikanten Vorteil gegenüber herkömmlichen Verpackungen dar. Gleichwohl ist es denkbar, Klebstoffe oder andere stoffschlüssige Verbundtechniken zu verwenden, um das Einsatzteil besonders sicher an der Verpackung zu befestigen.

Gemäß einer Ausführungsform ist der Randabschnitt der Verpackungsöffnung zumindest teilweise in den Spalt aufgenommen, wobei der erste Dichtabschnitt im Bereich einer Innenseite der Verpackung zumindest abschnittsweise dichtend anliegt und wobei der zweite Dichtabschnitt im Bereich einer Außenseite der Verpackung zumindest abschnittsweise dichtend anliegt. Die Verpackungsöffnung ist somit wirksam von innen und außen abgedichtet. Die Dichtungseigenschaften des ersten und zweiten Dichtabschnitts können sich zudem gegenseitig ergänzen, um eine gewünschte Abdichtwirkung zu erzielen.

Gemäß einer Ausführungsform weist die Verpackungsöffnung eine lichte Weite auf, die an ein Außenmaß des Einsatzteils im Bereich des Spalts angepasst ist. Die Dichtwirkung kann somit noch weiter optimiert werden. Beispielsweise kann zwischen dem Randabschnitt und dem Einsatzteil ein Dichtsitz, insbesondere Presssitz, bestehen, wodurch eine erhöhte Dichtwirkung erzielt wird.

Gemäß einer Ausführungsform weisen der erste Dichtabschnitt und der zweite Dichtabschnitt jeweils ein Übermaß gegenüber der lichten Weite der Verpackungsöffnung auf. Etwaige Toleranzen in der Verpackungsöffnung können auf diese Weise zuverlässig kompensiert werden ohne die Dichtwirkung zu beeinträchtigen. Ferner ist es bevorzugt, dass der erste Dichtabschnitt ein Übermaß gegenüber dem zweiten Dichtabschnitt aufweist.

Hierdurch kann die Verpackung zwischen dem ersten und zweiten Dichtabschnitt eingespannt werden, um die Dichtwirkung und die mechanische Stabilität des Randabschnitts zu erhöhen.

Gemäß einer Ausführungsform weist der Spalt eine lichte Weite auf, die zumindest abschnittsweise geringer als eine Dicke des Randabschnitts ist. Beispielsweise kann der Spalt etwas kleiner sein als die Verpackungsstärke, sodass der Randabschnitt in dem Spalt fixiert wird.

Die Verpackung kann grundsätzlich aus einem beliebigen Material gebildet sein, wobei jedoch bestimmte Materialien bevorzugt sein können. Vorzugsweise ist die Verpackung aus einem flexiblen Material gebildet, welches an seiner Innenseite mit einer Beschichtung, wie etwa aus Polyethylen beschichtet sein kann. Beispielsweise kann ein Kartonmaterial verwendet werden. Eine Flexibilität des Materials besitzt den Vorteil, dass die Verpackung gut mit dem Einsatzteil verbunden werden kann und dadurch zuverlässig abgedichtet wird. Das Material kann auch elastische Eigenschaften aufweisen.

Gemäß einer Ausführungsform ist der Randabschnitt relativ zu der Verpackung zumindest teilweise verformt. Vorzugsweise ist der Randabschnitt im Bereich des zweiten Dichtabschnitts zumindest teilweise in die Verpackung hinein verformt, insbesondere in Form einer Sicke. Durch die Verformung können der zweite Dichtabschnitt und/oder die Einführhilfe zumindest teilweise in die Verpackung versenkt werden, sodass möglichst keine Dichtungsteile oder andere mechanische Teile außen an der Verpackungsoberfläche überstehen. Ferner kann die Verformung die mechanische Stabilität des Randabschnitts verbessern, sodass das in die Verpackungsöffnung eingesetzte Einsatzteil nicht oder nur geringfügig bewegbar ist.

Das Einsatzteil kann mit einer Verschlusskappe verschlossen sein, um den Verpackungsinhalt vor äußeren Fremdstoffen zu schützen. Es versteht sich, dass die Verschlusskappe vorzugsweise zumindest ähnlich gut abdichtet, wie der erste und zweite Dichtabschnitt. Beispielsweise kann die Verschlusskappe eine Drehverschlusskappe sein, die an einer Innenseite einen Dichtring oder Dichtabschnitt aufweist, der mit einem Rand des Hohlkörpers zusammenwirkt, wenn die Drehverschlusskappe auf ein Außengewinde des Hohlkörpers aufgeschraubt ist. Die Verschlusskappe kann aus dem gleichen Material wie der Hohlkörper gebildet sein. Die Verschlusskappe kann z.B. aus Polyethylen oder Polypropylen gebildet sein. Vorzugsweise besitzt die Verschlusskappe ein Außenmaß, welches an die Größe der Verpackungsöffnung angepasst ist. Beispielsweise kann ein Außendurchmesser der Kappe geringer als eine lichte Weite der Verpackungsöffnung sein. Dies ermöglicht, dass das Einsatzteil zusammen mit der Verschlusskappe in die Verpackungsöffnung eingesetzt werden kann. Hierdurch ergeben sich Vorteile bei dem Einsetzen in die Verpackungsöffnung, wie nachfolgend noch weiter erläutert wird.

Das Einsatzteil kann beispielsweise aus einem der folgenden Materialien gebildet sein: Polyethylen, Polypropylen, Holz, Bambus. Diese Beispiele sind nicht abschließend. Vorzugsweise besteht zumindest der Hohlkörper aus einem der genannten Materialien.

Die Erfindung bezieht sich ferner auf ein Verfahren zum Einsetzen eines Einsatzteils in eine Verpackungsöffnung, die an einer Verpackung, insbesondere einer Lebensmittelverpackung, ausgebildet ist. Das Einsatzteil ist nach einem der hier beschriebenen Ausführungsformen ausgebildet, wobei das Verfahren zumindest folgende Schritte umfasst: Einführen eines ersten Endes des Einsatzteils in die Verpackungsöffnung; Bewegen des Einsatzteils durch die Verpackungsöffnung bis ein Randabschnitt der Verpackungsöffnung an wenigstens einer Einführhilfe des Einsatzteils zur Anlage kommt; Drehen des Einsatzteils in eine vorbestimmte Drehrichtung relativ zu der Verpackung, wobei der Randabschnitt während des Drehens mit der wenigstens einen Einführhilfe zusammenwirkt, um den Randabschnitt in einen Spalt einzuführen, der zwischen einem ersten Dichtabschnitt und einem zweiten Dichtabschnitt des Einsatzteils gebildet ist. Das Einsatzteil kann auf diese Weise schnell und zuverlässig in die Verpackungsöffnung eingesetzt werden und dichtend mit dem Randabschnitt verbunden werden. Der Einsatz von Ultraschallschweißen oder anderen Techniken zum stoffschlüssigen Verbinden ist nicht notwendig. Ferner ist das Verfahren, insbesondere die Drehbewegung, gut automatisierbar. Das Verfahren ist somit für den Einsatz in der industriellen Volumenproduktion bestens geeignet.

Gemäß einer Ausführungsform wird das erste Ende des Einsatzteils von einer Innenseite der Verpackung aus in die Verpackungsöffnung eingeführt. Auf diese Weise kann gewährleistet werden, dass der zweite Dichtabschnitt einschließlich der Einführhilfe nach dem Einsetzen nicht mit dem Verpackungsinhalt in Kontakt kommen. Ferner kann ein erfolgreiches Einsetzen von der Außenseite leichter überprüft werden, etwa durch optische Sensoren. Das Einsatzteil kann bereits vor dem Einführen des Einsatzteils in die Verpackungsöffnung mit einer Verschlusskappe versehen sein, wobei das Außenmaß der Verschlusskappe geringer als die lichte Weite der Öffnung ist. Die Verschlusskappe muss somit nicht anschließend mit dem Einsatzteil verbunden werden. Zudem wird das Risiko eines Eindringens von Fremdstoffen in die Verpackung oder den Hohlkörper während des Verfahrens verringert.

In diesem Zusammenhang ist es auch vorteilhaft, wenn ein Dichtring des ersten Dichtabschnitts bereits nach dem Einführen des Einsatzteils an der Innenseite der Verpackung anliegt und hierdurch die Innenseite der Verpackung gegenüber dem zweiten Dichtabschnitt und dem Spalt abschirmt.

Gemäß einer Ausführungsform ist ein zweites Ende des Einsatzteils in einer Halterung aufgenommen und relativ zu der Halterung verdrehbar, wobei das Drehen des Einsatzteils mittels eines Drehwerkzeugs ausgeführt wird, welches an dem ersten Ende des Einsatzteils angreift.

Gemäß einer Ausführungsform ist ein zweites Ende des Einsatzteils während des Verfahrens drehfest in einer Halterung aufgenommen, wobei das Drehen des Einsatzteils mittels der Halterung ausgeführt wird.

Es versteht sich, dass anstelle einer Drehung des Einsatzteils auch eine Drehung der Verpackung in Betracht kommt. Eine Drehung des Einsatzteils ist jedoch bevorzugt.

Gemäß einer Ausführungsform gleitet die wenigstens eine Einführhilfe während des Drehens des Einsatzteils an dem Randabschnitt entlang, wobei die Einführhilfe den Randabschnitt in Richtung hin zu dem Spalt drängt. Die Einführhilfe kann insbesondere wie zuvor beschrieben ausgestaltet sein, um das Einführen des Randabschnitts in den Spalt zu erleichtern.

Gemäß einer Ausführungsform erfolgt das Drehen des Einsatzteils um einen Drehwinkel, der von einer Anzahl von Einführhilfen des Einsatzteils anhängig ist, insbesondere wobei der Drehwinkel zumindest im Wesentlichen gleich 360 Grad geteilt durch die Anzahl von Einführhilfen ist. Hierbei wird davon ausgegangen, dass die Einführhilfen in gleichmäßigen Abständen entlang des Außenumfangs des Einsatzteils angeordnet sind. Beispielsweise kann der Drehwinkel im Falle von zwei diametral gegenüberliegenden Einführhilfen zumindest im Wesentlichen 180 Grad betragen. Es ist jedoch zu verstehen, dass der erforderliche Drehwinkel nicht von der Anzahl der Einführhilfen abhängig sein muss. Beispielsweise können die Einführhilfen derart ausgebildet sein, dass der Randabschnitt in Abhängigkeit von dem Drehwinkel entlang eines nicht lediglich punktuellen Umfangsbereichs in den Spalt eingeführt wird. Ferner kann der Drehwinkel zusätzlich von einem Umfangsbereich abhängig sein, in dem sich die Einführhilfe und der zweite Dichtabschnitt überlappen.

Es ist bevorzugt, dass die vordefinierte Drehrichtung für das Drehen des Einsatzteils gleich der Drehrichtung ist mit der eine Drehverschlusskappe auf das Einsatzteil aufgeschraubt wird, um das Einsatzteil zu verschließen. Somit kann die für das Einsetzen des Einsatzteils erforderliche Drehbewegung vorteilhaft durch Drehen der aufgeschraubten Verschlusskappe ausgeführt werden.

Die Erfindung wird nachfolgend lediglich beispielhaft anhand der Zeichnungen erläutert, die Folgendes zeigen:
- Fig. 1: eine Perspektivansicht eines Einsatzteils gemäß einer Ausführungsform der Erfindung;
- Fig. 2: eine Draufsicht auf das Einsatzteil von Fig. 1;
- Fig. 3: eine Seitenquerschnittsansicht auf das Einsatzteil von Fig. 2;
- Fig. 4: ein vergrößerter Ausschnitt der Seitenquerschnittsansicht von Fig. 3;
- Fig. 5: eine Seitenansicht auf das Einsatzteil von Fig. 2 mit einer teilweisen Querschnittsansicht;
- Fig. 6: ein vergrößerter Ausschnitt der Seitenquerschnittsansicht von Fig. 5;
- Fig. 7: eine teilweise freigestellte Perspektivansicht auf einen Ausschnitt einer Verpackung mit dem Einsatzteil von Fig. 1;
- Fig. 8: eine Perspektivansicht auf einen weiteren Ausschnitt einer Verpackung mit dem Einsatzteil von Fig. 1.
- Fig. 9: eine Perspektivansicht auf eine Verpackungsöffnung und ein Einsatzteil gemäß einer weiteren Ausführungsform der Erfindung;
- Fig. 10: eine teilweise freigestellte Perspektivansicht auf die Verpackungsöffnung von Fig. 9 mit eingeführtem Einsatzteil;
- Fig. 11: die teilweise freigestellte Perspektivansicht von Fig. 10, wobei das Einsatzteil um einen ersten Drehwinkel gedreht ist;
- Fig. 12: die teilweise freigestellte Ansicht von Fig. 11 in einer Seitenansicht;
- Fig. 13: die Seitenansicht von Fig. 11, wobei das Einsatzteil um einen zweiten Drehwinkel gedreht ist;
- Fig. 14: eine Querschnittsansicht einer Verpackung während dem Einsetzen eines Einsatzteils in eine Verpackungsöffnung.

Für gleiche oder gleichartige Teile werden dieselben Bezugszeichen verwendet. Um gleiche oder gleichartige Teilen voneinander zu unterscheiden, werden auch gestrichte Bezugszeichen verwendet.

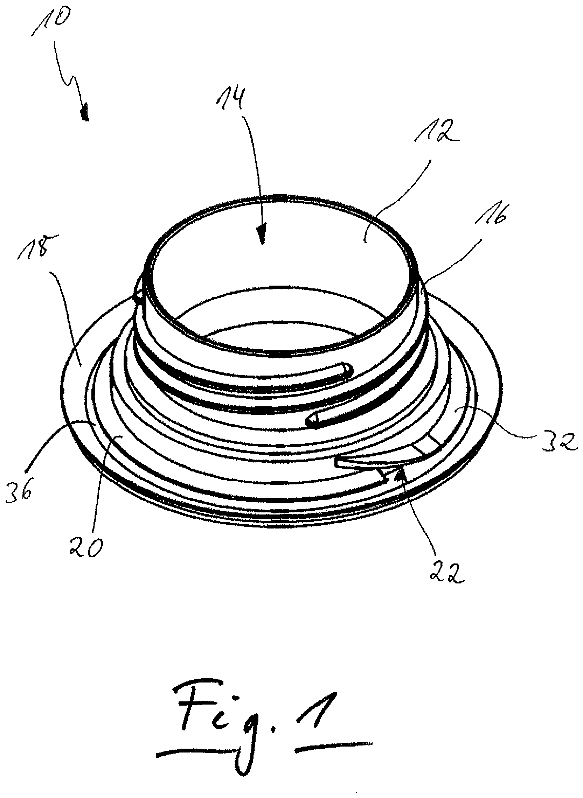

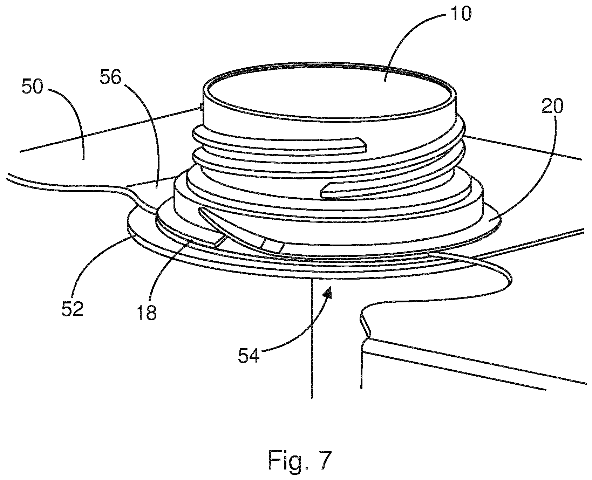

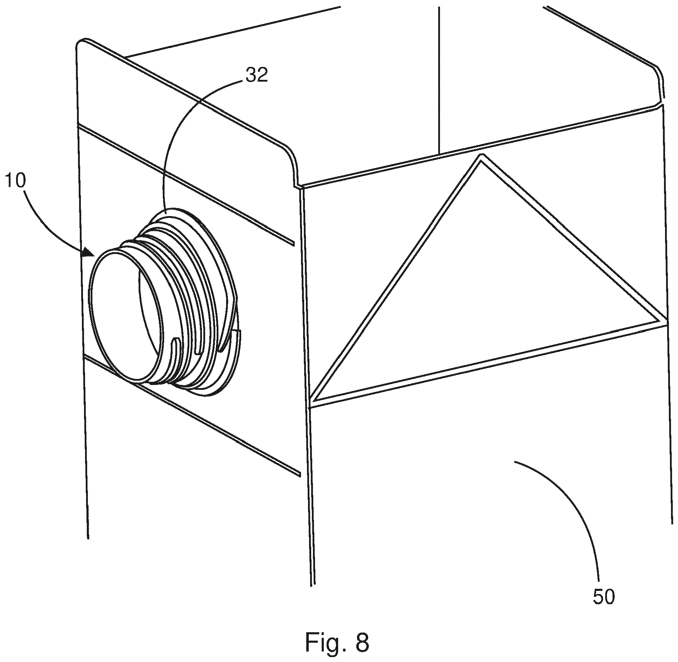

Fig. 1 zeigt ein Einsatzteil 10, das einen im Wesentlichen zylindrisch geformten Hohlkörper 12 aufweist. Der Hohlkörper 12 umschließt einen Kanal 14, der sich durch das Einsatzteil 10 hindurch erstreckt und an beiden Enden offen ist. Das Einsatzteil 10 dient zum Ausbilden eines Drehverschlusses und kann hierzu vorteilhaft in eine Verpackungsöffnung 54 eingesetzt werden, die an einer Lebensmittelverpackung 50 ausgebildet ist (vgl. Fig. 7 und 8). Zum Verschließen des Kanals 14 wird eine in Fig. 1 nicht näher gezeigte Verschlusskappe auf ein Außengewinde 16 des Einsatzteils 10 aufgeschraubt. Das Außengewinde 16 ist an einer Außenseite des Hohlkörpers 12 ausgebildet.

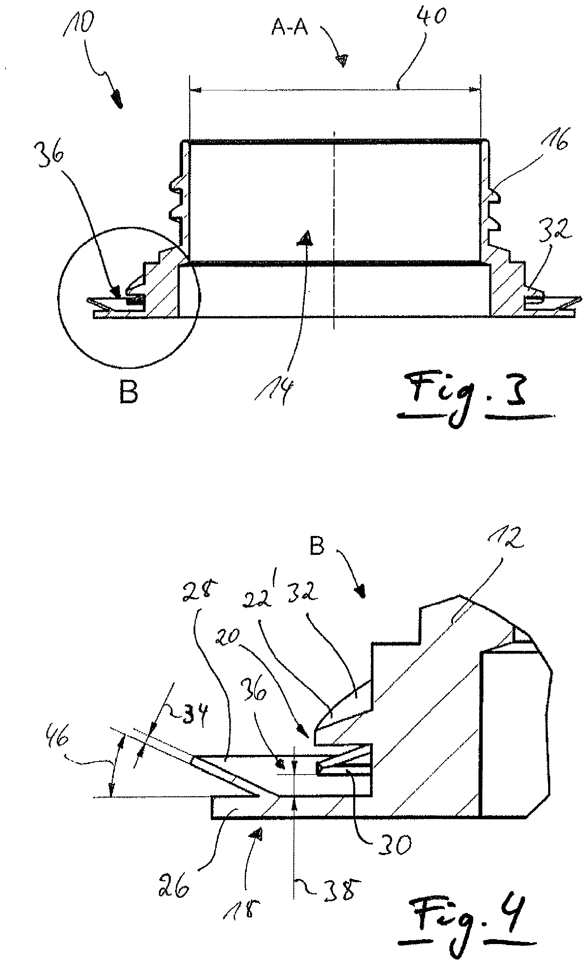

An der Außenseite des Hohlkörpers 12 sind ferner ein erster Dichtabschnitt 18 und ein zweiter Dichtabschnitt 20 ausgebildet, die sich jeweils ringförmig um den Hohlkörper 12 herum erstrecken. Der erste Dichtabschnitt 18 und der zweite Dichtabschnitt 20 dienen zur Abdichtung der Verpackungsöffnung 54, wenn das Einsatzteil 10, wie etwa in Fig. 8 gezeigt, in die Verpackungsöffnung 54 eingesetzt ist. In Fig. 1 ist ferner eine Einführhilfe 22 gezeigt, die dazu dient, einen die Verpackungsöffnung 54 begrenzenden Randabschnitt 52 der Verpackung 50 in einen Spalt 36 einzuführen, der zwischen dem ersten Dichtabschnitt 18 und dem zweiten Dichtabschnitt 20 gebildet ist und nachfolgend mit Bezug auf Fig. 3 bis 6 genauer beschrieben wird.

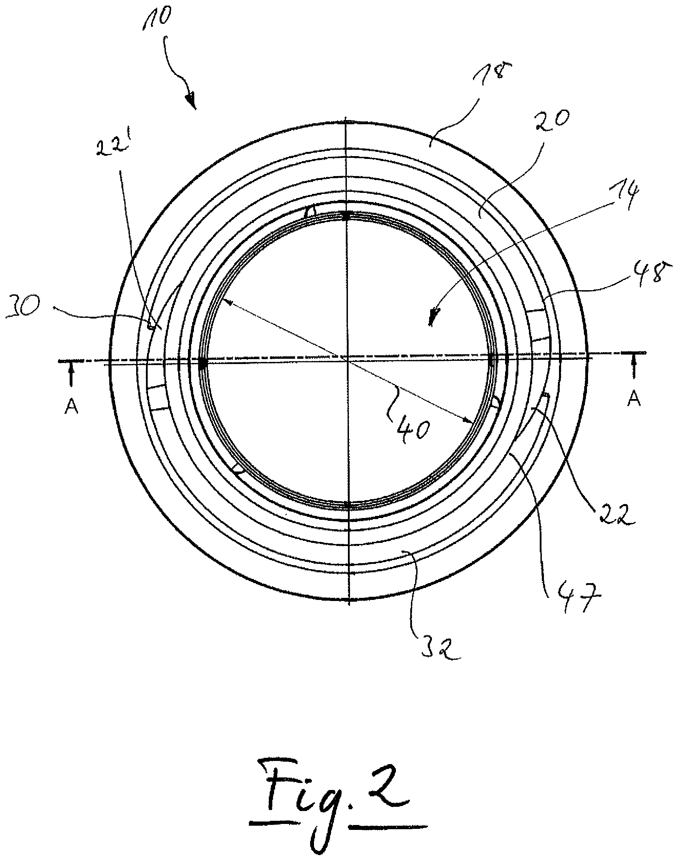

Das Einsatzteil 10 ist in Fig. 2 in einer Draufsicht von oben gezeigt. Es ist zu erkennen, dass der Kanal 14 einen Innendurchmesser 40 aufweist, der beispielsweise 21,50 mm betragen kann. Der Innendurchmesser 40 kann aber auch anders dimensioniert sein. Ferner ist zu erkennen, dass zwei gleichartige Einführhilfen 22, 22' mit Bezug auf den Hohlkörper 12 an diametral gegenüberliegenden Abschnitten des Einsatzteils 10 ausgebildet sind. Die Einführhilfen 22, 22' weisen jeweils einen sichelförmigen Abschnitt auf, der eine Unterbrechung des zweiten Dichtabschnitts 20 überdeckt und sich schräg weg von dem zweiten Dichtabschnitt 20 verjüngt (vgl. Fig. 1 und 2). Die Einführhilfen 22, 22' sind in Umfangsrichtung des zweiten Dichtabschnitts 20 gleichsinnig orientiert. Die Einführhilfen 22, 22' und deren Funktionsweise werden nachfolgend noch genauer beschrieben. Abweichend von der gezeigten Anzahl von zwei Einführhilfen 22, 22` kann auch lediglich eine Einführhilfe 22 vorgesehen sein.

In Fig. 3 ist das Einsatzteil 10 in einer Querschnittsseitenansicht gezeigt, wobei der Querschnitt entlang einer in Fig. 2 dargestellten Schnittlinie A-A verläuft. Der Kreis B kennzeichnet einen Bereich des Einsatzteils 10, der in Fig. 4 in einer Vergrößerung gezeigt ist.

Der Hohlkörper 12 weist einen Flanschabschnitt 26 auf, der sich von dem Hohlkörper 12 in radialer Richtung nach außen weg erstreckt, vgl. Fig. 4. Auf dem Flanschabschnitt 26 ist ein Dichtlippenring 28 ausgebildet, der zusammen mit dem Flanschabschnitt 26 den ersten Dichtabschnitt 18 bildet, um die Verpackungsöffnung 54 im Bereich einer Innenseite der Verpackung 50 abzudichten. Der Dichtlippenring 28 ist aus einem Elastomer gebildet und weist eine Dicke 34 auf, die beispielsweise 0,2 cm beträgt. Die Dicke 34 kann aber auch anders dimensioniert sein. Der Dichtlippenring 28 erstreckt sich ferner mit einem Neigungswinkel 46 von dem Flanschabschnitt 26 nach außen. Der Neigungswinkel 46 beträgt beispielsweise 25 Grad. Dies gewährleistet eine gute Anpassung an die Verpackung 50 und somit eine sichere Dichtwirkung. Für den Neigungswinkel 46 kommen grundsätzlich aber auch andere Werte in Betracht. Der Flanschabschnitt 26 sowie der Hohlkörper 12 sind aus Polyethylen oder Polypropylen gebildet. Es sind jedoch auch andere Materialien denkbar.

Der zweite Dichtabschnitt 20 dient zum Abdichten der Verpackungsöffnung 54 im Bereich einer Außenseite der Verpackung 50. Der zweite Dichtabschnitt 20 umfasst hierfür einen Haltering 32, der im Querschnitt im Wesentlichen keilförmig ausgebildet ist, wobei sich die Keilform von dem Hohlkörper 12 radial nach außen verjüngt. Ferner ist der Haltering 32, wie in Fig. 4 zu erkennen, im Bereich der Einführhilfe 22` unterbrochen. Dies ermöglicht ein leichtes Einführen des Randabschnitts 52 in den Spalt 36. Der Haltering 32 ist aus Polyethylen oder Polypropylen gebildet und integral mit dem Hohlkörper 12 ausgebildet. Es ist zu verstehen, dass ein die Unterbrechung des Halterings 32 begrenzendes Ende 30 des Halterings 32 nicht mit der Einführhilfe 22` verbunden ist (vgl. Fig. 1 bis 4). Der Haltering 32 gewährleistet eine sichere mechanische Befestigung des Einsatzteils 10 an der Verpackung, insbesondere entlang des Randabschnitts 52. Darüber hinaus entfaltet der Haltering 32 auch eine Dichtwirkung gegenüber Fremdstoffen, die von außen durch die Verpackungsöffnung 54 in die Verpackung 50 eindringen könnten. Zwar weist der Haltering im Bereich der Einführhilfen 22, 22` jeweils eine Unterbrechung auf. Es hat sich jedoch gezeigt, dass die mit den Unterbrechungen einhergehende prinzipielle Schmälerung der möglichen Dichtwirkung aufgrund der weiteren Dichtungseigenschaften des Einsatzteils 10 vernachlässigbar ist.

Der Haltering 32 ist aus Polyethylen oder Polypropylen (oder einem anderen Material) gebildet und in axialer Richtung des Hohlkörpers 12 unmittelbar benachbart zu dem Flanschabschnitt 26 angeordnet, sodass sich der Spalt 36 abschnittsweise zwischen dem Flanschabschnitt 26 und dem Haltering 32 erstreckt und in diesem Bereich eine Nut des Hohlkörpers 12 bildet. Die Nut leistet einen zusätzlichen Dichtungsbeitrag, wenn der in den Spalt 36 aufgenommene Randabschnitt 52 im Bereich der Nut einen Dichtsitz mit dem Einsatzteil 10 eingeht. Dies kann durch geeignete Dimensionierung der Verpackungsöffnung 54 bewerkstelligt werden, wie nachfolgend noch näher erläutert wird.

Der Haltering 32 ist im Bereich der Einführhilfen 22, 22` jeweils unterbrochen, um eine jeweilige Einführöffnung für den Randabschnitt 52 der Verpackung 50 zu schaffen. Es ist jedoch auch möglich, eine abweichende Anzahl von Einführhilfen 22, 22' vorzusehen. Beispielsweise kann lediglich eine Einführhilfe vorgesehen sein, sodass die Anzahl von Unterbrechungen des Halterings 32 minimiert wird.

Wie bereits erwähnt ist zwischen dem ersten Dichtabschnitt 18 und dem zweiten Dichtabschnitt 20 der Spalt 36 gebildet, der zur Aufnahme des Randabschnitts 52 dient. Der Spalt 36 weist zwischen dem Haltering 32 und dem Flanschabschnitt 26 einen Bereich mit einer lichten Weite 38 auf, die beispielsweise 0,5 cm oder 0,8 cm beträgt. Um eine besonders sichere Dichtwirkung zu erzielen, ist die Weite 38 an eine Dicke des Randabschnitts 52 angepasst. Beispielsweise weist das Material der Verpackung 50 eine Dicke auf, die größer als die Weite 38 ist. Die Verpackung 50 kann beispielsweise eine Dicke von 1 mm aufweisen.

In Fig. 4 ist ferner gut zu erkennen, dass der Dichtlippenring 28 den Haltering 32 in radialer Richtung umgibt. Hierdurch kann der Randabschnitt 52 besonders wirksam zwischen den beiden Dichtlippenringen 28, 30 eingespannt werden, um die Dichtwirkung weiter zu verbessern. Zudem ist zu erkennen, dass der Dichtlippenring 28 einen größeren Durchmesser als der Haltering 32 aufweist. Der Dichtlippenring 28 und der Haltering 32 liegen somit an unterschiedlichen Bereichen der Verpackung 50 an, die in radialer Richtung zueinander beabstandet sind. Dies ermöglicht, dass ein die Verpackungsöffnung 54 unmittelbar begrenzender Teil des Randabschnitts 52 zwischen dem Flanschabschnitt 26 und dem Haltering 32 eingespannt wird. Die Dichtwirkung ist entlang dieses Bereichs auch besonders zuverlässig.

Die Einführhilfen 22, 22' sind integral mit dem Haltering 32 ausgebildet und bilden einen Übergang zwischen Bereichen des Hohlkörpers 12 mit unterschiedlichem Außendurchmesser. Dies ist gut in Fig. 1 und Fig. 2 zu erkennen. In einem ersten Umfangsbereich 47 ist der Außendurchmesser geringer als in einem zweiten Umfangsbereich 48, der einer Außenkante des Halterings 32 entspricht. Der Außendurchmesser im ersten Umfangsbereich 47 kann z.B. 27,5 mm betragen. Die Einführhilfen 22, 22' weisen jeweils eine Sichelform auf, die sich für das Einführen des Randabschnitts 52 als besonders günstig erwiesen hat. Ferner ist Fig. 1 zu erkennen, dass die Einführhilfen 22, 22` jeweils schräg zu einer Umfangsrichtung des Halterings 32 verlaufen. Die Einführhilfen 22, 22' verlaufen schräg zu einer axialen Richtung des zylindrischen Hohlkörpers 12, sodass während einer Drehung des Hohlkörpers 12 um die Zylinderachse eine axiale Kraft auf den Randabschnitt 52 in Richtung hin zu dem Spalt 36 ausgeübt werden kann.

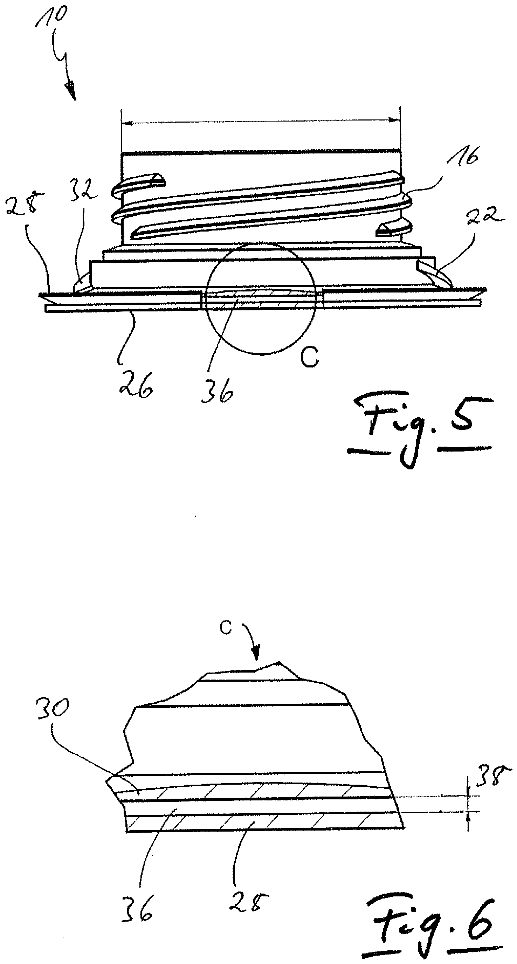

In Fig. 5 ist das Einsatzteil 10 in einer Seitenansicht gezeigt, die in dem Bereich C eine Querschnittsansicht auf den Spalt 36 enthält. Der Bereich C ist in Fig. 6 vergrößert dargestellt.

Fig. 7 zeigt die Verpackung 50 mit eingesetztem Einsatzteil 10. Zum besseren Verständnis ist die Verpackung 50 teilweise freigestellt. Insbesondere ist zu erkennen, dass der Randabschnitt 52 durch eine Sicke 56 verformt ist. Der Haltering 32 ist somit teilweise in die Verpackung 50 versenkt. Dies erhöht die mechanische Stabilität und sorgt für einen zusätzlichen Schutz des zweiten Dichtabschnitts 20 vor äußeren Einflüssen. Die Verpackungsöffnung 54 ist kreisrund ausgebildet und weist eine Größe auf, die an einen Außendurchmesser des Einsatzteils 10 im Bereich des Spalts 36 angepasst ist. Vorzugsweise ist der Durchmesser der Verpackungsöffnung 54 zumindest im Wesentlichen gleich oder geringfügig größer als der Außendurchmesser des Einsatzteils 10 im Bereich des Spalts 36, d.h. im Bereich der Nut. Auf diese Weise kann ein Dichtsitz zwischen dem Einsatzteil 10 und der Verpackung 50 hergestellt werden. In einem Beispiel beträgt der Durchmesser der Verpackungsöffnung etwa 28 mm und der Außendurchmesser des Einsatzteils 10 im Bereich des Spalts 36 beträgt etwa 27,5 mm. Auf diese Weise ist sichergestellt, dass die Einführhilfen 22, 22' durch die Verpackungsöffnung 54 durchgreifen können.

In Fig. 8 ist das Einsatzteil 10 in einem Zustand gezeigt, in dem das Einsatzteil 10 in die Verpackungsöffnung 54 eingesetzt ist. Es ist zu erkennen, dass der Haltering 32 an der Außenseite der Verpackung 50 anliegt und der Randabschnitt 52 daher vollständig in den Spalt 36 aufgenommen ist, wie zuvor beschrieben.

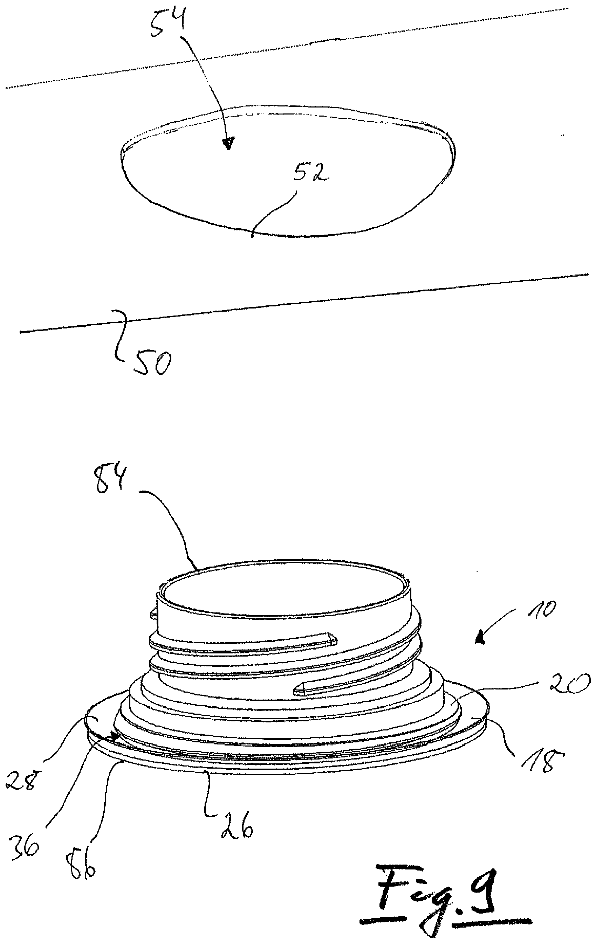

Mit Bezug auf Fig. 9 bis 14 wird nachfolgend ein Verfahren zum Einsetzen des Einsatzteils 10 in die Verpackungsöffnung 54 erläutert. Das Einsatzteil 10 ist gemäß einer weiteren Ausführungsform ausgebildet. Merkmale des Einsatzteils 10 von Fig. 1 können jedoch auch bei dem Einsatzteil 10 von Fig. 9 verwirklicht sein und umgekehrt.

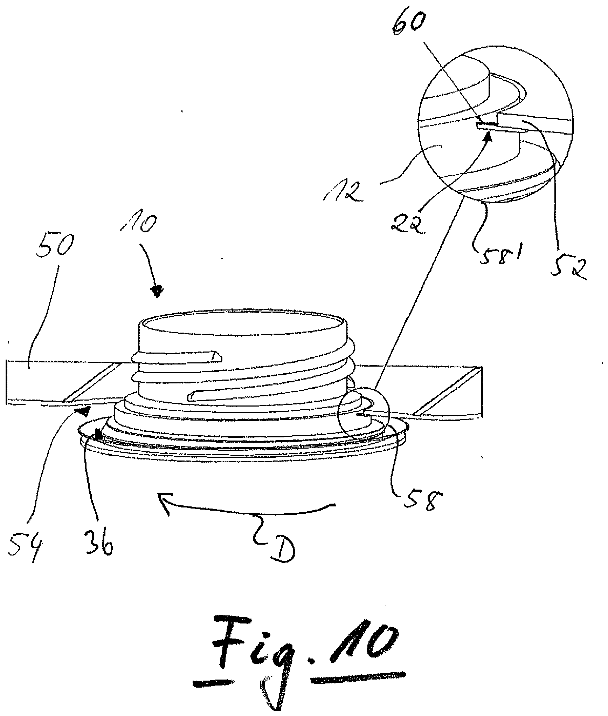

In Fig. 9 ist schematisch ein Ausschnitt der Verpackung 50 gezeigt, in dem die Verpackungsöffnung 54 angeordnet ist. Die Verpackungsöffnung 54 ist ein kreisrunder Durchlass durch die Verpackungswand. Unterhalb der Verpackung 50 ist das Einsatzteil 10 dargestellt, welches mit einem ersten Ende 84 in die Verpackungsöffnung 54 eingeführt wird. Ein zweites Ende 86 des Einsatzteils 10 entspricht dem Bereich des Flanschabschnitts 26. Die Enden 84, 86 können auch als Stirnseiten des Einsatzteils 10 bezeichnet werden. In einem ersten Schritt wird das Einsatzteil 10 durch die Verpackungsöffnung 54 geschoben bis die Einführhilfe 22 (in Fig. 9 aufgrund der Perspektive auf das Einsatzteil 10 nicht erkennbar) abschnittsweise an der Verpackung 50 anliegt. Dieser Zustand ist in Fig. 10 gezeigt. Fig. 10 zeigt das in die Verpackungsöffnung 54 eingeschobene Einsatzteil 10 in einer Perspektivansicht, wobei die Verpackungsöffnung 54 etwa hälftig freigestellt ist, sodass die Anlage des Randabschnitts 52 an der Einführhilfe 22 besser zu erkennen ist. Der mit einem Kreis gekennzeichnete Bereich 58 ist als vergrößerter Bereich 58` separat dargestellt. Abweichend zu dem Einsatzteil 10 von Fig. 1 ist lediglich eine Einführhilfe 22 vorgesehen.

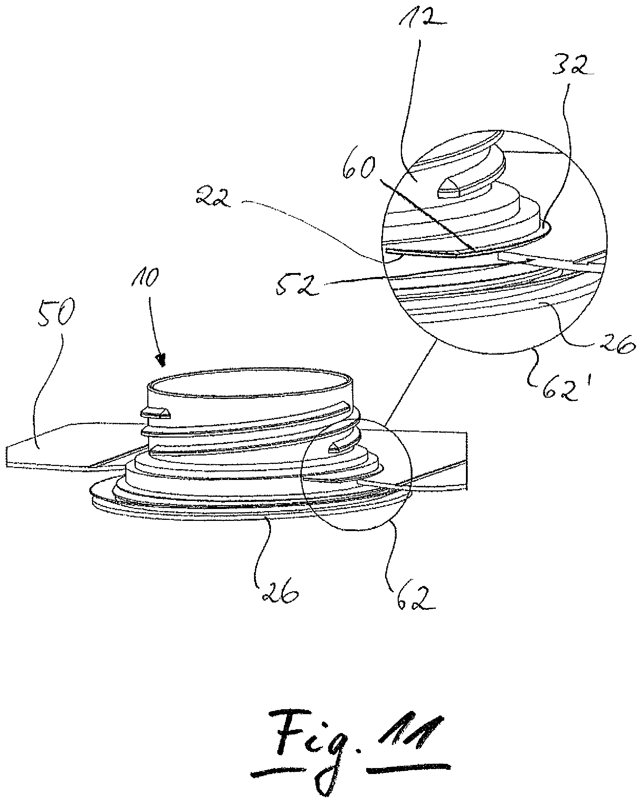

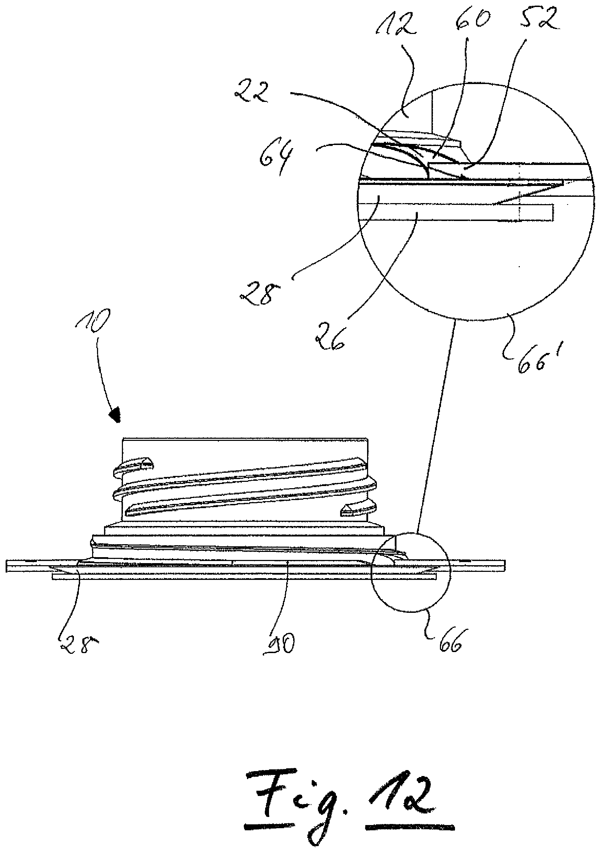

Es ist zu erkennen, dass der Randabschnitt 52 auf der Einführhilfe 22 aufliegt, insbesondere im Bereich einer Gleitkante 60 der Einführhilfe 22. Das Einsatzteil 10 wird nun in eine Drehrichtung D gedreht, um den Randabschnitt 52 in den Spalt 36 einzuführen. Im Zuge einer Drehung um einen ersten Drehwinkel gleitet der Randabschnitt 52 an der Gleitkante 60 entlang, wobei die Gleitkante 60 den Randabschnitt 52 mit zunehmender Drehung umgreift und hierdurch eine Kraft auf den Randabschnitt 52 in Richtung hin zu dem Spalt 36 ausübt. Dies ist in Fig. 11 veranschaulicht, wobei der Bereich 62 als Bereich 62' in einer Vergrößerung gezeigt ist. Es ist zu erkennen, dass sich der Randabschnitt 52 teilweise zwischen dem Haltering 32 und dem Flanschabschnitt 26 befindet. Zur weiteren Verdeutlichung ist dieser Zustand in Fig. 12 in einer Seitenansicht gezeigt, wobei ein Bereich 66 als Bereich 66' vergrößert gezeigt ist. Der Randabschnitt 52 liegt in einem Anlagebereich 64 an dem Dichtlippenring 28 an, wobei der Dichtlippenring 28 noch nicht komprimiert ist. Allerdings wird der Innenraum der Verpackung 50 bereits abgeschirmt. Ein Eintreten von Mikropartikeln oder dergleichen in die Verpackung 50 wird somit unterbunden. Es versteht sich, dass die Drehrichtung D auch entgegengesetzt sein kann, wenn die Einführhilfe 22 im Vergleich zu Fig. 12 gegensinnig ausgebildet ist. Die Drehrichtung D kann relativ zur Verpackung 50 auch dann entgegengesetzt zu der in Fig. 10 gezeigten Richtung sein, wenn das Einsatzteil 10 abweichend von Fig. 10 von der Außenseite in die Verpackungsöffnung 54 eingeführt und gedreht werden würde.

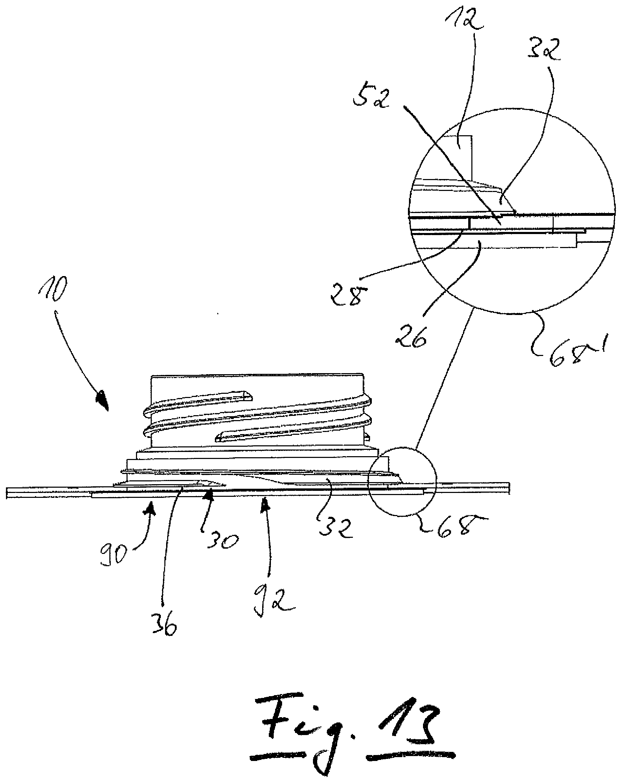

Das Einsatzteil 10 wird nun weiter in die Drehrichtung D gedreht. Die Gleitkante 60 gleitet hierbei weiter an dem Randabschnitt 52 entlang. Aufgrund der gewindeartig ansteigenden Gleitkante 60 wird der Randabschnitt 52 weiter in Richtung hin zu dem Spalt 36 bewegt. Der Randabschnitt 52 wird auf den Dichtlippenring 28 gedrückt, sodass dieser komprimiert wird und schließlich flächig an dem Flanschabschnitt 26 zur Anlage kommt (Fig. 13). Ein Bereich 68 ist zur besseren Erkennbarkeit von Details, entsprechend zu den Bereichen 58`, 62`, 66`, als vergrößerter Bereich 68' dargestellt. Der Randabschnitt 52 ist nun entlang des Außenumfangs des Hohlkörpers 12 vollständig in dem Spalt 36 aufgenommen, wobei der erste Dichtabschnitt 18 mit dem Flanschabschnitt 26 und dem Dichtlippenring 28 dichtend an der Innenseite des Randabschnitts 52 anliegt. Ferner liegt der zweite Dichtabschnitt 20 mit dem Haltering 32 dichtend an der Außenseite des Randabschnitts 52 an. Das Einsatzteil 10 und der Randabschnitt 52 sind auf diese Weise mechanisch miteinander verbunden. Gleichzeitig dichtet das Einsatzteil 10 die Verpackungsöffnung 54 entlang des Außenumfangs zuverlässig ab, d.h. ein Austreten von Verpackungsinhalt entlang des Randabschnitts 52 wird verhindert. Neben der durch den ersten Dichtabschnitt 18 und den zweiten Dichtabschnitt 20 erzielten doppelten Dichtwirkung wird die Dichtwirkung auch dadurch gesteigert, dass der Randabschnitt 52 in dem Spalt 36 komprimiert und dadurch in dem Spalt 36 eingespannt wird. Ferner spannt der Dichtlippenring 28 den Randabschnitt 52 in Richtung hin zu dem Haltering 32 vor. Dies sorgt für eine weitere Verbesserung der Dichtwirkung insgesamt und für eine sicherere Befestigung des Einsatzteils 10 an der Verpackung 50.

Aus Fig. 10, 12 und 13 ist zu erkennen, dass der Haltering 32 einen Überlappungsbereich 90 aufweist, in dem der Haltering 32 ein Gewinde bildet (vgl. Fig. 13). Der Überlappungsbereich 90 ist Bestandteil der Einführhilfe 22 und gewährleistet ein sicheres Einführen des Randabschnitts 52 in den Spalt 36. Der Überlappungsbereich 90 mündet in einen Öffnungsbereich 92, der eine Unterbrechung des Halterings 32 definiert (vgl. Fig. 13). Im Vergleich zu dem Überlappungsbereich 92 weist der Haltering 32 im Öffnungsbereich 92 eine größere Steigung auf. Die für das Einführen des Randabschnitts 52 in den Spalt 36 ausgeführte Drehbewegung beträgt wegen der lediglich einen Einführhilfe 22 und des Überlappungsbereichs 90 etwas mehr als 360 Grad. Je nach Ausgestaltung des Einsatzteils 10, z.B. im Falle von mehreren Einführhilfen (Fig. 2), kann der erforderliche Drehwinkel aber auch kleiner sein.

Das Einsatzteil kann ausgehend von dem in Fig. 13 gezeigten Zustand weiter in die Drehrichtung D, oder auch entgegen der Drehrichtung D gedreht werden. Der Eingriff des Randabschnitts 52 in den Spalt 36 wird hierdurch jedoch nicht beeinträchtigt. Dies ist von Vorteil, um zu verhindern, dass durch eine auf das Einsatzteil 10 ausgeübte Drehkraft die Befestigung des Einsatzteils 10 an dem Randabschnitt 52 beeinträchtigt wird. Beispielsweise wird die Befestigung des Einsatzteils 10 an dem Randabschnitt 52 und die hiermit einhergehende Dichtwirkung durch Auf- oder Abschrauben einer Verschlusskappe nicht beeinträchtigt, wenn das Einsatzteil 10 dabei eine Drehbewegung erfährt. Es ist allerdings ein erhöhter Kraftaufwand vonnöten, um die Haftreibung zwischen dem Randabschnitt 52 und dem Einsatzteil 10 zu überwinden. Aus diesem Grund ist die Haftreibung vorzugsweise so dimensioniert, dass eine Drehung des Einsatzteils 10 bei bestimmungsgemäßer Verwendung mit einem Drehverschluss ausgeschlossen ist.

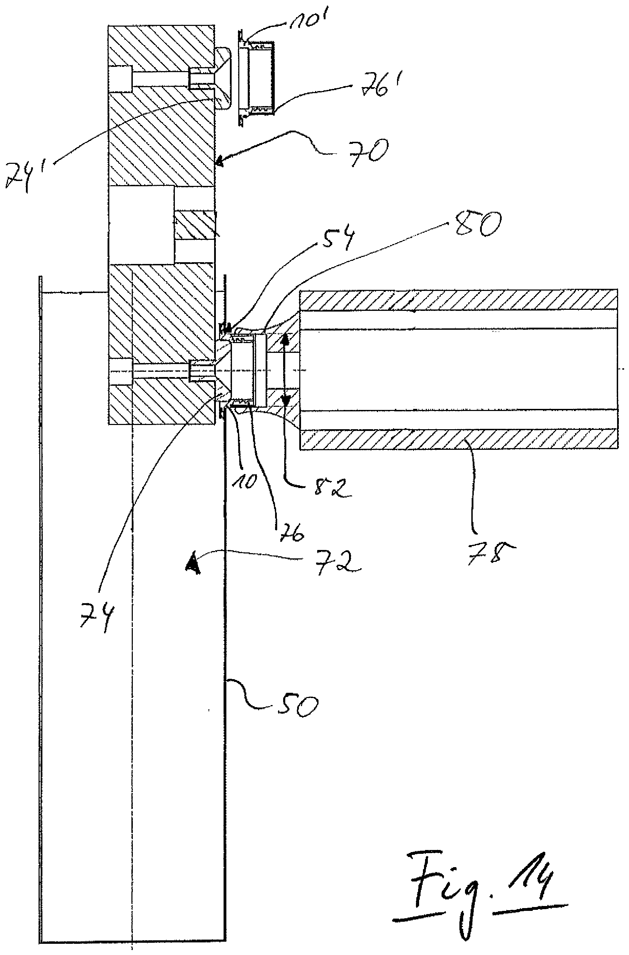

Das mit Bezug auf Fig. 9 bis 13 erläuterte Verfahren wird vorteilhaft mit Werkzeugen durchgeführt, um das Verfahren in der Massenproduktion anzuwenden. Dies wird im Folgenden anhand von Fig. 14 näher erläutert. Die Verpackung 50 ist in Fig. 14 schematisch als eine quaderförmige Getränkeverpackung mit einer stirnseitigen Öffnung angedeutet, durch die ein Haltearm 70 teilweise in einen Innenraum 72 der Verpackung 50 eingreift. Der Haltearm 70 ist mit zwei Halteelementen 74, 74' ausgestattet, die zum Halten von jeweiligen Einsatzteilen 10, 10' dienen. Auf die Einsatzteile 10, 10' ist jeweils eine Verschlusskappe 76, 76' aufgeschraubt. Vorzugsweise ist die Verschlusskappe 76, 76' während der Durchführung des beschriebenen Verfahrens aufgeschraubt, wobei die Verschlusskappe 76 in den Fig. 9 bis 13 nicht gezeigt ist.

Das Einsatzteil 10 ist in Fig. 14, wie anhand von Fig. 10 erläutert, bereits durch die Verpackungsöffnung 54 geführt, wobei jedoch noch keine Drehbewegung ausgeführt wurde. Der Montagezustand entspricht somit demjenigen von Fig. 10. Es ist zu verstehen, dass das Einsatzteil 10 mit dem Haltearm 70 von der Innenseite der Verpackung 50 aus durch die Verpackungsöffnung 54 eingeführt wird. Zum Ausführen der Drehbewegung wird zunächst ein Drehwerkzeug 78 mit dem Einsatzteil 10 verbunden, indem eine Kappenaufnahme 80 des Drehwerkzeugs 78 mit der Verschlusskappe 76 drehfest gekoppelt wird. Hierzu weist die Kappenaufnahme 80 eine innere Weite 82 auf, die an das Außenmaß der Verschlusskappe 76 derart angepasst ist, dass zwischen der Verschlusskappe 76 und der Kappenaufnahme 80 ein Klemmsitz besteht. Das Drehwerkzeug 78 kann dann als Ganzes gedreht werden, um die gewünschte Drehbewegung des Einsatzteils 10 auszuführen. Alternativ kann das Drehwerkzeug 78 auch so ausgestaltet sein, dass lediglich die Kappenaufnahme 80 gedreht wird.

Nachdem das Einsatzteil 10 durch Drehen des Drehwerkzeugs 78, wie anhand von Fig. 10 bis 13 beschrieben, an der Verpackung 50 befestigt wurde, wird das Drehwerkzeug 78 von dem Einsatzteil 10 entfernt. Der Haltearm 70 wird sodann von dem Einsatzteil 10 abgezogen und aus der Verpackung 50 herausbewegt. Dies kann vorteilhaft durch Ausführen einer Drehbewegung geschehen, bei der der Haltearm 70 mit dem Halteelement 74 in eine benachbarte Verpackung geführt wird (nicht gezeigt), um das Einsatzteil 10' analog zu dem Einsatzteil 10 in eine Verpackungsöffnung einzusetzen. Der Haltearm 70 und das Drehwerkzeug 78 sind vorzugsweise an beweglichen Roboterelementen befestigt, sodass die erforderlichen Bewegungen entlang vordefinierter Trajektorien präzise und schnell ausgeführt werden können. Auf diese Weise können eine hohe Anzahl von Einsatzteilen 10, 10' in kurzer Zeit in jeweilige Verpackungsöffnungen eingesetzt werden. Aufgrund der einfachen mechanischen Befestigungsweise, die eine zuverlässige Dichtwirkung bietet, sind zusätzliche Verfahrensschritte (z.B. Aufbringen von Klebstoffen oder Ultraschallschweißen) nicht erforderlich.

### Bezugszeichenliste

- 10: Einsatzteil
- 12: Hohlkörper
- 14: Kanal
- 16: Außengewinde
- 18: erster Dichtabschnitt
- 20: zweiter Dichtabschnitt
- 22, 22': Einführhilfe
- 26: Flanschabschnitt
- 28: Dichtlippenring
- 30: Ende des Halterings
- 32: Haltering
- 34: Dicke des Dichtlippenrings
- 36: Spalt
- 38: Weite
- 40: Innendurchmesser
- 42: Außendurchmesser des ersten Dichtabschnitts
- 44: Außendurchmesser des zweiten Dichtabschnitts
- 46: Neigungswinkel des Dichtlippenrings
- 47: erster Bereich
- 48: zweiter Bereich
- 50: Verpackung
- 52: Randabschnitt
- 54: Verpackungsöffnung
- 56: Sicke
- 58, 58': Bereich
- 60: Gleitkante
- 62, 62`: Bereich
- 64: Anlagebereich
- 66, 66`: Bereich
- 68, 68`: Bereich
- 70: Haltearm
- 72: Innenraum
- 74, 74`: Halteelement
- 76, 76`: Verschlusskappe
- 78: Drehwerkzeug
- 80: Kappenaufnahme
- 82: Weite
- 84: erstes Ende
- 86: zweites Ende
- 90: Überlappungsbereich
- 92: Öffnungsbereich

- D: Drehrichtung

## Patentansprüche

1. Einsatzteil (10) für eine Verpackungsöffnung (54), die an einer Verpackung (50), insbesondere einer Lebensmittelverpackung, ausgebildet ist,
wobei das Einsatzteil einen im Wesentlichen zylindrischen Hohlkörper (12) zum Durchleiten von Verpackungsinhalt durch die Verpackungsöffnung (54) aufweist,
wobei das Einsatzteil (10) einen ersten Dichtabschnitt (18) aufweist, um die Verpackungsöffnung (54) im Bereich einer Innenseite der Verpackung (50) abzudichten,
wobei das Einsatzteil (10) einen zweiten Dichtabschnitt (20) aufweist, um die Verpackungsöffnung (54) im Bereich einer Außenseite der Verpackung (50) abzudichten,
wobei zwischen dem ersten Dichtabschnitt (18) und dem zweiten Dichtabschnitt (20) ein Spalt (36) zur Aufnahme eines die Verpackungsöffnung (54) begrenzenden Randabschnitts (52) der Verpackung (50) gebildet ist,
**dadurch gekennzeichnet, dass** das Einsatzteil (10) wenigstens eine Einführhilfe (22) zum Einführen des Randabschnitts (52) in den Spalt (36) aufweist.

2. Einsatzteil nach Anspruch 1,
wobei der erste Dichtabschnitt (18) eine erste vordefinierte Dichtungsfunktion besitzt, um ein Austreten des Verpackungsinhalts aus der Verpackung (50) zu unterbinden, wenn das Einsatzteil (10) in die Verpackungsöffnung (54) eingesetzt und der Randabschnitt (52) in den Spalt (36) aufgenommen ist, und/oder
wobei der zweite Dichtabschnitt (20) eine zweite vordefinierte Dichtungsfunktion besitzt, um ein Eindringen von Fremdstoffen in die Verpackung (50) zu unterbinden, wenn das Einsatzteil (10) in die Verpackungsöffnung (54) eingesetzt und der Randabschnitt (52) in den Spalt (36) aufgenommen ist, und/oder
wobei sich der erste Dichtabschnitt (18) und/oder der zweite Dichtabschnitt (20) im Wesentlichen ringförmig um den Hohlkörper (12) herum erstrecken.

3. Einsatzteil nach zumindest einem der vorherigen Ansprüche,
wobei der erste Dichtabschnitt (18) einen ersten Dichtring (28) aufweist, der an einem Flanschabschnitt (26) des Hohlkörpers (12) ausgebildet ist, und/oder
wobei der zweite Dichtabschnitt (20) wenigstens einen zweiten Dichtring (30, 32) aufweist, der im Bereich der wenigstens einen Einführhilfe (22) unterbrochen ist.

4. Einsatzteil nach zumindest einem der vorherigen Ansprüche,
wobei der Spalt (36) zumindest abschnittsweise durch eine Nut des Hohlkörpers (12) gebildet ist, und/oder
wobei der erste Dichtabschnitt (18) ein Übermaß gegenüber dem zweiten Dichtabschnitt (20) aufweist, und/oder
wobei der erste Dichtabschnitt (18) den zweiten Dichtabschnitt (20) zumindest teilweise umgibt.

5. Einsatzteil nach zumindest einem der vorherigen Ansprüche,
wobei der Hohlkörper (12) einen ersten Bereich (47) mit einem ersten Außenmaß aufweist und wobei der zweite Dichtabschnitt (20) einen zweiten Bereich (48) mit einem zweiten Außenmaß aufweist, wobei das erste Außenmaß kleiner als das zweite Außenmaß ist, und wobei die wenigstens eine Einführhilfe (22) einen sichelförmigen Abschnitt aufweist, der einen Übergang zwischen dem ersten Bereich (47) und dem zweiten Bereich (48) bildet, und/oder
wobei die wenigstens eine Einführhilfe (22) schräg zu einer Umfangsrichtung des zweiten Dichtabschnitts (20) verläuft, und/oder
wobei die wenigstens eine Einführhilfe (22) integral mit dem zweiten Dichtabschnitt (20) oder einem Teil hiervon verbunden ist.

6. Einsatzteil nach zumindest einem der vorherigen Ansprüche,
wobei die wenigstens eine Einführhilfe (22) mehrere Einführhilfen umfasst, wobei vorzugsweise zwei Einführhilfen (22, 22`) vorgesehen sind, die an diametral gegenüberliegenden Seiten des Hohlkörpers (12) ausgebildet sind, insbesondere wobei die Einführhilfen (22, 22`) gleichartig ausgebildet sind, und/oder
wobei der erste Dichtabschnitt (18) zumindest teilweise flexibler als der zweite Dichtabschnitt (20) ausgebildet ist, und wobei der zweite Dichtabschnitt (20) vorzugsweise zumindest im Wesentlichen nicht flexibel ist.

7. Einsatzteil nach zumindest einem der vorherigen Ansprüche,
wobei der Hohlkörper (12) Mittel zum formschlüssigen Verbinden mit einer Verschlusskappe aufweist, insbesondere wobei der Hohlkörper (12) ein Außengewinde (16) zum Aufschrauben einer Verschlusskappe (76) aufweist.

8. System umfassend ein Einsatzteil (10) nach Anspruch 7 und eine Verschlusskappe (76) zum formschlüssigen Verbinden mit dem Hohlkörper (12).

9. Verpackung, insbesondere Lebensmittelverpackung, aufweisend eine Verpackungsöffnung (54), wobei ein Einsatzteil (10) in die Verpackungsöffnung (54) eingesetzt ist, und wobei das Einsatzteil (10) nach einem der vorherigen Ansprüche ausgebildet ist.

10. Verpackung nach Anspruch 9,
wobei das Einsatzteil (10) und die Verpackung (50) nicht miteinander verklebt, verschweißt, oder anderweitig stoffschlüssig verbunden sind, und/oder
wobei der Randabschnitt (52) der Verpackungsöffnung (54) zumindest teilweise in den Spalt (36) aufgenommen ist,
wobei der erste Dichtabschnitt (18) im Bereich einer Innenseite der Verpackung (50) zumindest abschnittsweise dichtend anliegt und wobei der zweite Dichtabschnitt (20) im Bereich einer Außenseite der Verpackung (50) zumindest abschnittsweise dichtend anliegt, und/oder
wobei die Verpackungsöffnung (54) eine lichte Weite aufweist, die an ein Außenmaß des Einsatzteils (10) im Bereich des Spalts (36) angepasst ist, insbesondere
wobei zwischen dem Randabschnitt (52) und dem Einsatzteil (10) ein Dichtsitz besteht, insbesondere wobei der erste Dichtabschnitt (18) und der zweite Dichtabschnitt (20) jeweils ein Übermaß gegenüber der lichten Weite der Verpackungsöffnung (54) aufweisen.

11. Verpackung nach zumindest einem der Ansprüche 9 oder 10,
wobei der Spalt (36) eine lichte Weite (38) aufweist, die zumindest abschnittsweise geringer als eine Dicke des Randabschnitts (52) ist, und/oder
wobei der Randabschnitt (52) relativ zu der Verpackung (50) zumindest teilweise verformt ist, und/oder
wobei das Einsatzteil (10) mit einer Verschlusskappe (76) verschlossen ist, insbesondere wobei ein Außenmaß der Verschlusskappe (76) an die Größe der Verpackungsöffnung (54) angepasst ist.

12. Verfahren zum Einsetzen eines Einsatzteils in eine Verpackungsöffnung, die an einer Verpackung (50), insbesondere einer Lebensmittelverpackung, ausgebildet ist, wobei das Einsatzteil (10) nach einem der Ansprüche 1 bis 7 ausgebildet ist, wobei das Verfahren zumindest folgende Schritte umfasst:
Einführen eines ersten Endes des Einsatzteils (10) in die Verpackungsöffnung (54); Bewegen des Einsatzteils (10) durch die Verpackungsöffnung (54) bis ein Randabschnitt (52) der Verpackungsöffnung (54) an wenigstens einer Einführhilfe (22) des Einsatzteils (10) zur Anlage kommt;
Drehen des Einsatzteils (10) in eine vorbestimmte Drehrichtung (D) relativ zu der Verpackung (50), wobei der Randabschnitt (52) während des Drehens mit der wenigstens einen Einführhilfe (22) zusammenwirkt, um den Randabschnitt (52) in einen Spalt (36) einzuführen, der zwischen einem ersten Dichtabschnitt (18) und einem zweiten Dichtabschnitt (20) des Einsatzteils (10) gebildet ist.

13. Verfahren nach Anspruch 12,
wobei das erste Ende (84) des Einsatzteils (10) von einer Innenseite der Verpackung (50) aus in die Verpackungsöffnung (54) eingeführt wird.

14. Verfahren nach Anspruch 12 oder 13,
wobei ein zweites Ende (86) des Einsatzteils (10) in einer Halterung (74) aufgenommen und relativ zu der Halterung (74) verdrehbar ist, und wobei das Drehen des Einsatzteils (10) mittels eines Drehwerkzeugs (78) ausgeführt wird, welches an dem ersten Ende (86) des Einsatzteils (10) angreift, oder
wobei ein zweites Ende (86) des Einsatzteils (10) während des Verfahrens drehfest in einer Halterung aufgenommen ist und wobei das Drehen des Einsatzteils (10) mittels der Halterung ausgeführt wird.

15. Verfahren nach zumindest einem der Ansprüche 11 bis 14,
wobei die wenigstens eine Einführhilfe (22) während des Drehens des Einsatzteils (10) an dem Randabschnitt (52) entlangleitet und den Randabschnitt (52) in Richtung hin zu dem Spalt (36) drängt, und/oder
wobei das Drehen des Einsatzteils (10) um einem Drehwinkel erfolgt, der von einer Anzahl von Einführhilfen (22) des Einsatzteils (10) anhängig ist, insbesondere wobei der Drehwinkel zumindest im Wesentlichen gleich 360 Grad geteilt durch die Anzahl von Einführhilfen ist.

## Claims

1. An insert (10) for a package opening (54), which is formed in a package (50), in particular a food package,
wherein the insert comprises an essentially cylindrical hollow body (12) for the passage of contents of the package through the package opening (54),
wherein the insert (10) comprises a first sealing section (18) for sealing the package opening (54) in the region of an inner side of the package (50),
wherein the insert (10) further comprises a second sealing section (20) for sealing the package opening (54) in the region of an outer side of the package (50),
wherein a gap (36) is formed between the first sealing section (18) and the second sealing section (20) in order to receive an edge section (52) of the package (50) adjacent to the package opening (54),
**characterised in that** the insert (10) comprises at least one insertion aid (22) for introducing the edge section (52) into the gap (36).

2. The insert according to claim 1,
wherein the first sealing section (18) has a first predefined sealing function of preventing the contents of the package from exiting from the package (50) when the insert (10) is inserted into the package opening (54) and the edge section (52) is received in the gap (36), and/or
the second sealing section (20) has a second predefined sealing function of preventing the penetration of foreign substances into the package (50), when the insert (10) is inserted into the package opening (54) and the edge section (52) is received in the gap (36), and/or
wherein the first sealing section (18) and/or the second sealing section (20) extend essentially in the form of a ring around the hollow body (12).

3. The insert according to at least one of the preceding claims,
wherein the first sealing section (18) comprises a first sealing ring (28), which is formed on a flange section (26) of the hollow body (12) and/or
wherein the second sealing section (20) comprises at least a second sealing ring (30, 32), which is interrupted in the region of the at least one insertion aid (22).

4. The insert according to at least one of the preceding claims,
wherein the gap (36) is formed at least in sections by a groove of the hollow body (12), and/or
wherein the first sealing section (18) has an excess dimension with respect to a second sealing section (20), and/or
wherein the first sealing section (18) at least partially surrounds the second sealing section (20).

5. The insert according to at least one of the preceding claims,
wherein the hollow body (12) comprises a first region (47) with a first external dimension and wherein the second sealing section (20) comprises a second region (48) with a second external dimension, wherein the first external dimension is smaller and the second external dimension, and wherein the at least one insertion aid (22) comprises a sickle-shaped section, which forms a transition between the first region (47) and the second region (48), and/or
wherein the at least one insertion aid (22) runs obliquely to a circumferential direction of the second sealing section (20), and/or
wherein the at least one insertion aid (22) is connected integrally with the second sealing section (20) or a part thereof.

6. The insert according to at least one of the preceding claims,
wherein the at least one insertion aid (22) includes a plurality of insertion aids, wherein two insertion aids (22, 22') are preferably provided, which are formed at diametrically opposite sides of the hollow body (12), in particular wherein the insertion aids (22, 22') are constituted similar, and/or
wherein the first sealing section (18) is constituted at least partially more flexible than the second sealing section (20), and wherein the second sealing section (20) is preferably at least essentially not flexible.

7. The insert according to at least one of the preceding claims,
wherein the hollow body (12) comprises means for the form-fitting connection to a closure cap, in particular wherein the hollow body (12) comprises an outer thread (16) so that a closure cap (76) can be screwed on.

8. A system comprising an insert (10) according to claim 7 and a closure cap (76) for the form-formfitting connection to the hollow body (12).

9. A package, in particular a food package, comprising a package opening (54), wherein an insert (10) is inserted into the package opening (54), and wherein the insert (10) is constituted according to any one of the preceding claims.

10. The package according to claim 9,
wherein the insert (10) and the package (50) are not glued, welded or otherwise firmly bonded to one another, and/or
wherein the edge section (52) of the package opening (54) is at least partially received in the gap (36),
wherein the first sealing section (18) abuts at least in sections in a region of an inner side of the package (50) in a sealing manner and wherein the second sealing section (20) abuts at least in sections in the region of the outer side of the package (50) in a sealing manner, and/or
wherein the package opening (54) has a clear width, which is matched to the external dimension of the insert (10) in the region of the gap (36), in particular wherein a tight fit is present between the edge section (52) and the insert (10), in particular wherein the first sealing section (18) and the second sealing section (20) each have an excess dimension with respect to the clear width of the package opening (54) .

11. The package according to at least one of claims 9 or 10,
wherein the gap (36) has a clear width (38) which at least in sections is smaller than a thickness of the edge section (52), and/or
wherein the edge section (52) is at least partially deformed relative to the package (50), and/or
wherein the insert (10) is closed with a closure cap (76), in particular wherein an excess dimension of the closure cap (76) is matched to the size of the package opening (54).

12. A method for the insertion of an insert into a package opening, which is formed in a package (50), in particular a food package,
wherein the insert (10) is constituted according to any one of claims 1 to 7, wherein the method includes at least the following steps:
introduction of a first end of the insert (10) into the package opening (54); movement of the insert (10) through the package opening (54) until an edge section (52) of the package opening (54) comes to rest against at least one insertion aid (22) of the insert (10);
rotation of the insert (10) in a predetermined direction of rotation (D) relative to the package (50), wherein the edge section (52) cooperates with the at least one insertion aid (22) during the rotation in order to introduce the edge section (52) into a gap (36), which is formed between a first sealing section (18) and a second sealing section (20) of the insert (10).

13. The method according to claim 12,
wherein the first end (84) of the insert (10) is introduced into the package opening (54) from an inner side of the package (50).

14. The method according to claim 12 or 13,
wherein a second end (86) of the insert (10) is accommodated in a holding fixture (74) and is rotatable relative to the holding fixture (74), and wherein the rotation of the insert (10) is carried out by means of a turning tool (78) which engages with the first end (86) of the insert (10), or
wherein a second end (86) of the insert (10) is accommodated non-rotatably in a holding fixture during the process and wherein the rotation of the insert (10) is carried out by means of the holding fixture.

15. The method according to at least one of claims 11 to 14,
wherein the at least one insertion aid (22) slides along the edge section (52) during the rotation of the insert (10) and pushes the edge section (52) in the direction towards the gap (36), and/or
wherein the rotation of the insert (10) takes place about an angle of rotation, which is dependent on a number of insertion aids (22) of the insert (10), in particular wherein the angle of rotation is at least essentially equal to 360 degrees divided by the number of insertion aids.

## Revendications

1. Pièce d'insertion (10) pour une ouverture d'emballage (54), qui est réalisée sur un emballage (50), en particulier un emballage pour denrée alimentaire,
dans laquelle la pièce d'insertion présente un corps creux (12) sensiblement cylindrique destiné à faire passer le contenu de l'emballage à travers l'ouverture d'emballage (54), dans laquelle la pièce d'insertion (10) présente une première section étanche (18) pour étanchéifier l'ouverture d'emballage (54) dans la zone d'un côté intérieur de l'emballage (50), dans laquelle la pièce d'insertion (10) présente une deuxième section étanche (20) pour étanchéifier l'ouverture d'emballage (54) dans la zone d'un côté extérieur de l'emballage (50),
dans laquelle un interstice (36) destiné à recevoir une section de bord (52), délimitant l'ouverture d'emballage (54), de l'emballage (50) est formé entre la première section étanche (18) et la deuxième section étanche (20),
**caractérisée en ce que** la pièce d'insertion (10) présente au moins un moyen d'aide à l'introduction (22) destiné à introduire la section de bord (52) dans l'interstice (36).

2. Pièce d'insertion selon la revendication 1,
dans laquelle la première section étanche (18) possède une première fonction d'étanchéité prédéfinie pour empêcher une sortie du contenu d'emballage hors de l'emballage (50) lorsque la pièce d'insertion (10) est insérée dans l'ouverture d'emballage (54) et que la section de bord (52) est logée dans l'interstice (36), et/ou
dans laquelle la deuxième section étanche (20) possède une deuxième fonction d'étanchéité prédéfinie pour empêcher une infiltration de matières extérieures dans l'emballage (50) lorsque la pièce d'insertion (10) est insérée dans l'ouverture d'emballage (54) et que la section de bord (52) est logée dans l'interstice (36), et/ou
dans laquelle la première section étanche (18) et/ou la deuxième section étanche (20) s'étendent sensiblement en forme d'anneau tout autour du corps creux (12) .

3. Pièce d'insertion selon au moins l'une quelconque des revendications précédentes,
dans laquelle la première section étanche (18) présente une première bague étanche (28), qui est réalisée sur une section de bride (26) du corps creux (12), et/ou
dans laquelle la deuxième section étanche (20) présente au moins une deuxième bague étanche (30, 32), qui est interrompue dans la zone de l'au moins un moyen d'aide à l'introduction (22).

4. Pièce d'insertion selon au moins l'une quelconque des revendications précédentes,
dans laquelle l'interstice (36) est formé au moins par endroits par une rainure du corps creux (12), et/ou
dans laquelle la première section étanche (18) présente une surdimension par rapport à la deuxième section étanche (20), et/ou
dans laquelle la première section étanche (18) entoure au moins en partie la deuxième section étanche (20) .

5. Pièce d'insertion selon au moins l'une quelconque des revendications précédentes,
dans laquelle le corps creux (12) présente une première zone (47) avec une première dimension extérieure et dans laquelle la deuxième section étanche (20) présente une deuxième zone (48) avec une deuxième dimension extérieure, dans laquelle la première dimension extérieure est inférieure à la deuxième dimension extérieure, et dans laquelle l'au moins un moyen d'aide à l'introduction (22) présente une section en forme de croissant, qui forme un passage entre la première zone (47) et la deuxième zone (48), et/ou
dans laquelle l'au moins un moyen d'aide à l'introduction (22) s'étend de manière oblique par rapport à une direction périphérique de la deuxième section étanche (20), et/ou
dans lequel l'au moins un moyen d'aide à l'introduction (22) est relié de manière intégrale à la deuxième section étanche (20) ou à une partie de celle-ci .

6. Pièce d'insertion selon au moins l'une quelconque des revendications précédentes,
dans laquelle l'au moins un moyen d'aide à l'introduction (22) comprend plusieurs moyens d'aide à l'introduction, dans laquelle de préférence deux moyens d'aide à l'introduction (22, 22') sont prévus, qui sont réalisés sur des côtés diamétralement opposés du corps creux (12), en particulier dans laquelle les moyens d'aide à l'introduction (22, 22') sont réalisés de manière similaire, et/ou
dans laquelle la première section étanche (18) est réalisée au moins en partie de manière plus flexible que la deuxième section étanche (20), et dans laquelle de préférence la deuxième section étanche (20) n'est au moins pas sensiblement flexible.

7. Pièce d'insertion selon au moins l'une quelconque des revendications précédentes,
dans laquelle le corps creux (12) présente des moyens destinés à être reliés par complémentarité de forme à un capot de fermeture, en particulier dans laquelle le corps creux (12) présente un filetage externe (16) destiné à visser un capot de fermeture (76).

8. Système comprenant une pièce d'insertion (10) selon la revendication 7 et un capot de fermeture (76) destiné à être relié par complémentarité de forme au corps creux (12).

9. Emballage, en particulier emballage pour denrée alimentaire, présentant une ouverture d'emballage (54), dans lequel une pièce d'insertion (10) est insérée dans l'ouverture d'emballage (54) et dans lequel la pièce d'insertion (10) est réalisée selon l'une quelconque des revendications précédentes.

10. Emballage selon la revendication 9,
dans lequel la pièce d'insertion (10) et l'emballage (50) ne sont pas collés, soudés ou liés autrement par liaison de matière l'un à l'autre, et/ou
dans lequel la section de bord (52) de l'ouverture d'emballage (54) est logée au moins en partie dans l'interstice (36),
dans lequel la première section étanche (18) repose tout en assurant l'étanchéité au moins par endroits dans la zone d'un côté intérieur de l'emballage (50) et dans lequel la deuxième section étanche (20) repose tout en assurant au moins par endroits l'étanchéité dans la zone d'un côté extérieur de l'emballage (50), et/ou
dans lequel l'ouverture d'emballage (54) présente une petite largeur, qui est adaptée à une dimension extérieure de la partie d'insertion (10) dans la zone de l'interstice (36), en particulier dans lequel un siège étanche est présent entre la section de bord (52) et la pièce d'insertion (10), en particulier dans lequel la première section étanche (18) et la deuxième section étanche (20) présentent respectivement une surdimension par rapport à la petite largeur de l'ouverture d'emballage (54).

11. Emballage selon au moins l'une quelconque des revendications 9 ou 10,
dans lequel l'interstice (36) présente une petite largeur (38), qui est au moins par endroits inférieure à une épaisseur de la section de bord (52), et/ou
dans lequel la section de bord (52) est au moins en partie déformée par rapport à l'emballage (50), et/ou
dans lequel la pièce d'insertion (10) est fermée avec un capot de fermeture (76), en particulier dans lequel une dimension extérieure du capot de fermeture (76) est adaptée à la taille de l'ouverture d'emballage (54) .

12. Procédé d'insertion d'une pièce d'insertion dans une ouverture d'emballage, qui est réalisée sur un emballage (50), en particulier un emballage pour denrée alimentaire, dans lequel la pièce d'insertion (10) est réalisée selon l'une quelconque des revendications 1 à 7, dans lequel le procédé comprend au moins des étapes suivantes :
l'introduction d'une première extrémité de la pièce d'insertion (10) dans l'ouverture d'emballage (54) ;
le déplacement de la pièce d'insertion (10) à travers l'ouverture d'emballage (54) jusqu'à ce qu'une section de bord (52) de l'ouverture d'emballage (54) vienne en appui sur au moins un moyen d'aide à l'introduction (22) de la pièce d'insertion (10) ;
la rotation de la pièce d'insertion (10) dans une direction de rotation (D) prédéfinie par rapport à l'emballage (50), dans lequel la section de bord (52) coopère avec l'au moins un moyen d'aide à l'introduction (22) pendant la rotation pour introduire la section de bord (52) dans un interstice (36), qui est formé entre une première section étanche (18) et une deuxième section étanche (20) de la pièce d'insertion (10).

13. Procédé selon la revendication 12,
dans lequel la première extrémité (84) de la pièce d'insertion (10) est introduite depuis un côté intérieur de l'emballage (50) dans l'ouverture d'emballage (54).

14. Procédé selon la revendication 12 ou 13,
dans lequel une deuxième extrémité (86) de la pièce d'insertion (10) est logée dans une fixation (74) et peut être tournée par rapport à la fixation (74), et dans lequel la rotation de la pièce d'insertion (10) est exécutée au moyen d'un outil de rotation (78), lequel s'engage sur la première extrémité (86) de la pièce d'insertion (10), ou
dans lequel une deuxième extrémité (86) de la pièce d'insertion (10) est logée dans une fixation de manière solidaire en rotation pendant le procédé et dans lequel la rotation de la pièce d'insertion (10) est exécutée au moyen de la fixation.

15. Procédé selon au moins l'une quelconque des revendications 11 à 14,
dans lequel l'au moins un moyen d'aide à l'introduction (22) glisse le long de la section de bord (52) pendant la rotation de la pièce d'insertion (10) et pousse la section de bord (52) en direction de l'interstice (36), et/ou
dans lequel la rotation de la pièce d'insertion (10) est effectuée selon un angle de rotation qui dépend d'un nombre de moyens d'aide à l'introduction (22) de la pièce d'insertion (10), en particulier dans lequel l'angle de rotation est au moins sensiblement égal à 360 degrés divisés par le nombre de moyens d'aide à l'introduction.
